(19) Europäisches Patentamt
European Patent Office
Office européen des brevets

(11) EP 2 333 925 B1

(12) **EUROPEAN PATENT SPECIFICATION**

(45) Date of publication and mention of the grant of the patent:
**13.02.2013 Bulletin 2013/07**

(51) Int Cl.:
***H02H 9/04*** *(2006.01)*

(21) Application number: **09015198.6**

(22) Date of filing: **08.12.2009**

(54) **Surge arrester condition monitoring**

Zustandsüberwachung für Überspannungsschutz

Surveillance de conditions de coupe-circuit de surtension

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**15.06.2011 Bulletin 2011/24**

(73) Proprietor: **Raychem International**
**Co. Clare (IE)**

(72) Inventors:
- **Normoyle, Brendan**
  **Castlemahon**
  **Co. Limerick (IE)**
- **Fitzgerald, Padraig**
  **Kilcornan**
  **Co. Limerick (IE)**
- **Leyden, Mark**
  **Ennis**
  **Co. Clare (IE)**
- **Bouche, Jean-Christophe**
  **Ennis, Co. Clare (IE)**

(74) Representative: **Grünecker, Kinkeldey, Stockmair & Schwanhäusser**
**Leopoldstrasse 4**
**80802 München (DE)**

(56) References cited:

| | |
|---|---|
| **EP-A2- 1 870 976** | **WO-A1-02/061904** |
| **DE-A1- 4 417 129** | **JP-A- 2004 037 169** |
| **US-A1- 2007 188 962** | **US-A1- 2009 207 034** |

- **Lavrent'ev G.G. et al.: "Device for Diagnostic Monitoring of Surge Arresters" Russian Electrical Engineering vol. 79, no. 9, 6 December 2008 (2008-12-06), pages 514-517, XP002578727 ISSN: 1934-8010 DOI: 10.3103/S1068371208090083 Retrieved from the Internet: URL:http://www.springerlink.com/content/32 432uq529647373/fulltext.pdf> [retrieved on 2010-04-19]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 333 925 B1

## Description

TECHNICAL FIELD OF THE INVENTION

The present invention relates to the monitoring of the health condition of surge arresters, more specifically, to the monitoring of surge arrester leakage currents as a means of determining changes in the health of a surge arrester over time.

BACKGROUND OF THE INVENTION

Surge arresters, also referred to as lightning arresters, are commonly used for protecting power networks and sensitive equipment against incoming overvoltages caused by lightning and/or switching surges.

However, in spite of their high reliability, the health condition of surge arresters tends to deteriorate with time, namely, due to excessive surge events, the amplitude of the discharging surge currents, etc.

For instance, a common type of lightning arresters used in power networks comprises a core of nonlinear resistance discs stacked inside a ceramic or polymeric casing that collectively functions as an insulator at normal operation voltages, with leakage currents of the order of the microampere, but exhibits very low resistance under an abnormally high voltage. When such an abnormal high voltage occurs in the protected line, the surge current flows through the resistance discs to the ground, thereby protecting against damage any electrical equipment connected to the power line.

However, the gradual deterioration of the nonlinear resistance with time leads to an increase of the leakage current, which when surpasses a certain threshold value, for example in the multi-milliampere range, may cause thermal runaway followed by the thermal destruction of the arrester.

Therefore, it is desirable to monitor the degree of deterioration of the surge arrester such as to identify when its lifetime is reaching the end and to replace the arrester in due time. In this way the destruction of equipment caused by failure of the surge arrester during a surge event can be avoided as well as unexpected shutdowns for repairing and replacing destroyed components.

This aspect is particularly important in electrical power transmission systems, whose operation and maintenance involve large investments in terms of time and costs.

Several techniques have been used for monitoring the health state of surge arresters while in an operative state, that is, while the surge arrester is connected to the power network or system to be protected against surges.

Document WO 02061904 A1 describes a device for monitoring a surge arrester connected to a power network, comprising a registering unit and means for attachment of the registering unit to the surge arrester. The registering unit comprises a grounding line, which is adapted to conduct a current flowing through the surge arrester to ground, means for registration of a current passing through the gounding line from the surge arrester, a member for registration of current pulses passing through the surge arrester, and a storage member for storing data concerning the current passing through the grounding line from the surge arrester and data concerning registered current pulses. The registering unit further comprises a field probe connected to ground, a sensor for registration of the current flowing between the field probe and ground, and a time meter, the storage member being adapted to store the data concerning the current passing through the grounding line from the surge arrester and the data concerning the current flowing between the field probe and ground associated to a time information determined by means of the time meter. The invention also relates to a system comprising one or several such registering units.

A conventional technique used for ascertaining the condition of a lightning arrester consists in measuring the total leakage current that flows through the grounding cable of the arrester. This leakage current exhibits a very small value, of the order of a few microampere, that remains constant over time except during a discharge event or when the condition of the arrester start to deteriorate.

This technique however has the disadvantage that it does not allow to accurately monitor deterioration of the non-linear resistance discs since the total leakage current that includes both the leakage current flowing through the non-linear resistance discs and the leakage current flowing down along the flanged surface of the ceramic casing.

For instance, ambient effects such as the deposition of atmospheric salt on the surface of the casing, a damp environment, etc, may provide a path for the flow of current along the ceramic casing. Further, since the external ambient conditions are variable, the current flowing along the ceramic casing may vary significantly and provide a false indication of the surge arrester condition.

A way of circumventing this problem is described in United States patent No. 4 507 701, which proposes a lightning arrestor with leakage current detection for detecting only the leakage current flowing through the non-linear resistance. However, since this technique relies on the special design of the surge arrester it is obviously not suitable for monitoring other types of surge arresters.

An alternative technique for monitoring the health state of metal-oxide surge arresters is based on the analysis of a third harmonic component of the resistive leakage current, such as the example described in United States patent No. 7 336 193.

This type of arrester has a non-linear conductance gives rise to the formation of a third harmonic component in the resistive leakage current of the arrester when a sinusoidal voltage is applied.

Generally, such techniques consist in outputting a leakage current via a measuring element, filtering out the third harmonic component and evaluating it in terms of its amplitude. Since the degradation of the surge arrester leads to an increase of the resistive component of the leakage current, and therefore, to an increase of the third harmonic component, information on the surge arrester condition can be obtained.

However, these techniques have the disadvantage that the monitoring devices are costly and require a high degree of experience for correctly measuring and interpreting the measured values. In addition, some of these devices require auxiliary power supply and are therefore not suitable for continuous long-term monitoring on arresters.

Other techniques for inferring on the surge arrester lifetime based on monitoring other parameters other than leakage current have also been put forward.

Some techniques rely on monitoring the number of surge events as an indicator of the usage of the arrester and therefore on its deterioration level.

For instance, Japanese Patent application No. 2003037932 describes an arrester provided with a surge counting circuit that counts the number of discharging events caused by thunder surges through the arrester. When a predetermined number of arresting processes has been reached, correspondingly differently coloured light signals are output.

However, such techniques have the inconvenience that they do not monitor the actual operation condition of the surge arrester. They also do not take into consideration other factors that influence the condition of the arrester, such as energy discharged during the surge event. Therefore, in case the surge arrester becomes deteriorated after a surge well before the predetermined number of surge events is reached, this situation is not signalled. On the other hand, the surge arrester may still be in a good operation condition when the predetermined counting number is reached.

Another type of monitoring method for identifying deterioration in the condition of lightning arresters having a zinc-oxide type element is described in European Patent No. 0 343 658 B1. This technique is based on assessing degradation of the zinc-oxide type element by measuring its oxygen concentration which is known to increase as degradation of the element goes on. However, it has the inconvenient that it cannot be used for other type of surge arresters.

In addition to the disadvantages mentioned above, existing techniques based on monitoring total leakage current or the third harmonic component of the leakage current rely on simply monitoring these parameters at isolated instants of time and making periodic comparisons of this data irrespective of the number of surge events that might have occurred in between.

They do not allow to correlate the monitored values with the respective surge events, for instance, duration and amplitude of the surge discharge, which also have an influence on the deterioration of the surge arrester condition. They also do not take into consideration influences from external ambient conditions such as temperature, air humidity, etc, in the measured leakage currents.

Existing monitoring techniques also do not allow to identify and report the deterioration of the surge arrester condition shortly after the occurrence of a surge event.

## SUMMARY OF THE INVENTION

The present invention aims at overcoming the disadvantages and shortcomings of the prior art techniques and an object thereof is to provide a monitoring device, a monitoring system and corresponding monitoring method for monitoring a condition of a surge arrester of mostly any type and that allow to better identify the level of deterioration of the surge arrester condition at any time or shortly after an occurrence of a surge event.

This object is solved by the subject matter of the independent claims. Advantageous embodiments of the present invention are defined by the dependent claims.

The present invention provides a monitoring device for monitoring a condition of a surge arrester, comprising monitoring means adapted to monitor leakage current of the surge arrester over a monitoring period.

The monitoring means is further adapted to monitor a leakage current recovery of the surge arrester after an occurrence of a surge event, the monitoring period being a recovery monitoring period following the surge event.

The amount of time taken for the leakage current to return from the level attained during the surge pulse to a normal plateau level is a very powerful indicator on whether or not the arrester is still functioning. By monitoring the variation of leakage current shortly after the occurrence of a surge event over a certain period of time, it is possible to estimate parameters that characterise the ability of the surge arrester to recover from the surge discharge, such as the recovery time, and therefore assert on its health condition at the present time.

According to an example, it is provided a monitoring reporting device for reporting on a condition of a surge arrester, comprising a communication member adapted to receive monitoring data from the monitoring device according to the invention, a memory means adapted to store the received monitoring data, input means adapted to detect a request for reporting on the condition of the surge arrester, processing means adapted to generate report data indicative of the condition of the surge arrester based on the monitoring data, and a reporting means adapted to report the report data.

The report data may be generated by correlating the monitoring data such as to present information indicative of the condition of the surge arrester in a form that allows the operator to easily evaluate and identify the arrester condition.

The present invention further provides a monitoring system for monitoring a condition of a surge arrester, comprising the monitoring device according to the invention, and a programmable access controller for handling communications among the monitoring device and a receiver. The receiver may be the monitoring reporting device of the invention.

This has the advantage of allowing to monitor one or more surge arresters simultaneously and to provide simultaneous and remote access to several operators to the monitoring data of one or more surge arresters.

A further advantage of the monitoring reporting device and monitoring system of the invention lies in that they make it possible to an operator to analyze and evaluate the condition of the arrester remotely from the surge arrester based on the locally acquired monitoring data. This increases not only convenience for the operator but also their own security since surge arresters are generally located close to high power networks and/or areas that are susceptible to surge events, such as lightning, and therefore, it is not safe for operators to stay close to the surge arrester for a long time. Electronic devices used for processing data are generally expensive and may also be damaged by surge events.

According to an example, it is provided a method for monitoring a condition of a surge arrester, comprising the steps of: acquiring monitoring data of a leakage current recovery of the surge arrester over a recovery monitoring period, wherein said monitoring data includes measurement values of leakage current and respective times of measurement, generating report data indicative of the condition of the surge arrester based on the monitoring data, and reporting the report data.

## BRIEF DESCRIPTION OF THE FIGURES

The accompanying drawings are incorporated into and form a part of the specification for the purpose of explaining the principles of the invention. The drawings are not to be construed as limiting the invention to only the illustrated and described examples of how the invention can be made and used.

Further features and advantages will become apparent from the following and more particular description of the invention as illustrated in the accompanying drawings, in which:

**Fig. 1** shows a monitoring device according to the present invention already installed in a surge arrester to be monitored;
**Fig. 2** is a simplified block diagram of a monitoring device according to an embodiment of the present invention;
**Fig. 3** is a flow-chart illustrative of a recovery monitoring procedure according to an embodiment of the present invention;
**Fig. 4** shows a perspective view and a simplified block diagram of a monitoring reporting device according to an embodiment of the present invention;
**Fig. 5** shows a view of an Arrester Details Screen according to an embodiment of the present invention;
**Fig. 6** illustrates a view of a Surge Readings Screen according to an embodiment of the present invention;
**Fig. 7** illustrates a view showing a Leakage Current Recovery Screen for a surge event according to an embodiment of the present invention;
**Fig. 8** illustrates a view of a Leakage Current Readings Screen according to an embodiment of the present invention;
**Fig. 9** illustrates a view of a Leakage Current Analysis Screen that is obtained when a user selects "Leakage Current Analysis for this surge arrester" on the "Arrester Details Screen" illustrated in Fig. 5;
**Fig. 10** illustrates a view obtained when a user selects "View" on the screen view illustrated in Fig. 9.
**Fig. 11** shows a view of a thermal Recovery Analysis Screen that is obtained when a user selects Thermal Recovery Analysis for this Surge Arrester on the "Arrester Details Screen" illustrated in Fig. 5;
**Fig. 12** shows a view of a Recovery Time Data Screen showing the evolution of the recovery time with the occurrence of surge events; and
**Fig. 13** illustrates a monitoring system according to an embodiment of the present invention.

## DETAILED DESCRIPTION OF THE INVENTION

Advantageous embodiments of the present invention will now be described in further detail with reference to the accompanying drawings.

Fig. 1 shows a monitoring device 1 according to the present invention already installed in a surge arrester 2 to be monitored.

The illustrated surge arrester 2 is of the vertical type, having a lower part 3 made of an electrical conducting material that rests on a number of insulating bases 4 or supports. A surge arrester grounding cable 5, or simply grounding line, is connected to the lower part 3 for allowing the surge arrester leakage current to flow to the ground.

The monitoring device 1 of the invention is nevertheless adapted to monitor surge arresters having configurations other than the one illustrated in Fig. 1.

The monitoring device 1 is intended to be installed in the proximity of the surge arrester 2 to be monitored and to remain electrically connected to the surge arrester 2 during the arrester working life such as to acquire monitoring data that reflect and/or influence the arrester operating condition over time.

In order to monitor the surge arrester leakage current, the monitoring device 1 comprises a line connector 6 adapted to be electrically connected to the arrester grounding cable 5 and a ground connector 7 for connecting the monitoring device 1 to an earth connection cable 8.

The line connector 6 and ground connector 7 are provided on the exterior of a housing 9 of the monitor device 1 and may be of any type suitable for establishing electrical connections with electrical cables. For instance, the line and ground connectors 6, 7 may comprise a termination of the M16 type fitted with locknuts at one end for fixing the electrical cable. A moulded resin insulating part 10 may be provided around the line connector 6 for separating the end of the arrester grounding cable 5 from the housing 9.

The monitoring device 1 can therefore be easily connected to and disconnected from the surge arrester 2 and the ground at any time when needed.

In the illustrated embodiment, the monitoring device 1 monitors total leakage current of the surge arrester 2. However, in surge arresters designed for allowing the measurement of leakage current flowing through their non-linear resistance, the monitoring device 1 of the invention may also be used.

Figure 2 illustrates a simplified block diagram of the monitoring device 1 according to an embodiment of the present invention.

The monitoring device 1 comprises a monitoring means 210 adapted to perform monitoring procedures for acquiring monitoring data over a period of time .

One of such monitoring data is the leakage current that flows through the grounding line 5 of the surge arrester 2.

In order to monitor the leakage current, the monitoring device 1 comprises a leakage current measurement unit 220 adapted to be electrically coupled to the arrester grounding line 5 and to measure a signal indicative of the leakage current that flows through the grounding line 5, such as a current or a voltage.

In the present embodiment, the leakage current measurement unit 220 comprises a leakage current sensor based on planar magnetic current technology, such as a Planar Magnetic Current Sensor (not shown), for measuring surge currents and leakage currents flowing through the grounding line 5.

The leakage current measurement unit 220 may comprise more than one Planar Magnetic Current Sensor. The Planar Magnetic Current Sensors may be each individually surrounded by an electromagnetic shield (not shown), such as a thin metallic shield; this has the purpose of protecting the sensors and internal circuitry from damage which could be sustained resulting from high voltages induced on the sensors during high current lightning impulses through the grounding line 5. The material and shield thickness of the electromagnetic shield are designed so that they have the properties of a low pass filter, since high current surge events typically are of a relatively high frequency (-25kHz to 250kHz) it attenuates them sufficiently that the voltage seen on the coils during normal operation is within safe limits. At the same time, the frequencies of interest (<200Hz) are allowed through to the coils of the Planar Magnetic Current Sensor with minimal attenuation.

The leakage current measured may be either the root mean square (rms), the mean or the peak value of the leakage current flowing though the grounding line 5.

Alternatively or optionally, the leakage current measurement unit 220 may comprise a third harmonic measurement unit (not shown) adapted to measure and provide a third harmonic component of the resistive leakage current.

The monitoring means 210 preferably comprises a processor 212 and a timer unit 214 for controlling the acquisition of measurement data, monitoring procedures and processing of the measurement data. The timer unit 214, which can be implemented by the clock functions of the processor 212, provides time information for the monitoring device to perform the required actions, such as the instant of time when a measurement is to be made, that is, time of measurement, date of the measurement, etc. This time information may be included by the monitoring means 110 in the monitoring data.

In addition, the monitoring device 1 may include a function for monitoring external conditions, such as relative humidity and ambient temperature, as these have an influence on the arrester leakage currents.

In order to monitor these parameters, the monitoring device 1 comprises an external conditions measurement unit 230 connected to the monitoring means 210 which are adapted to acquire monitoring data concerning external conditions such as ambient temperature and/or relative humidity over time. In particular, the ambient temperature and/or relative humidity may be acquired at the same moment the leakage current is measured.

In the illustrated embodiment, the external conditions measurement unit 230 includes a temperature sensor 232 and an hygrometer 234. However, the number of sensors for monitoring external parameters is not limited to this example, and the external conditions measurement unit 230 may be provided with only one type of sensor or with various types of sensors for measuring various parameters of external conditions.

In an alternative embodiment, the monitoring device 1 does not comprise the external conditions measurement unit 230. In this case, the monitoring device 1 may be provided with suitable connections for connecting the monitoring means 210 with an external conditions measurement unit that is provided outside the monitoring device 1.

The monitoring device 1 may also comprise storage means 240, such as an EEPROM, which the monitoring means 210 uses for storing the acquired monitoring data, such as measurement values of leakage current, ambient temperature, relative humidity and respective times of measurement. Alternatively, the storage means 240 may be provided as a removable storage medium to allow an operator to recover the monitored data and analyze these data with a personal processing device, such as a PDA.

In order to allow that the monitored data be recovered remotely from the monitoring device 1, the monitoring device 1 may comprise a communication means 260 for allowing transmission of monitoring data from the monitoring device 1 to a receiver. The communication means 260 may also allow remote control of the monitoring device 1. The communication means 260 may be adapted for transmitting monitoring and/or control data via electrical cables or to allow wireless data transmission, for instance, by means of an antenna 11, such as a Zigbee antenna.

The receiver may be a programmable access controller or gateway 14 that functions as the master node within a network to manage communications with the individual surge arresters. The gateway 14 may also function as the intermediate node for transmitting data from the monitoring device 1 to a monitoring reporting device 400, such as a web server application or personal processing device, for reporting the monitoring data on the condition of the surge arrester to a user. A monitoring reporting device 400 according to the present invention will be described later. Alternatively, the monitoring data may be transmitted directly from the monitoring device 1 to the monitoring reporting device 400, which in this case acts as the receiver.

Another factor that may influence the leakage current recovery time is the energy absorbed by the lightning arrester during a surge event. The energy absorbed will be related to the surge amplitude and duration.

In order to take this information into account for evaluating the condition of the surge arrester 2, the monitoring device 1 may comprise a surge event detection 250 adapted to detect and measure the amplitude and width of the surge pulse.

Once the surge pulse is detected, the monitoring means 210 acquires the measured amplitude and width of the surge pulse and includes this information in the acquired monitoring data.

The monitoring device 1 of the present invention also differs from the existing prior art in that it may monitor the reduction of leakage current shortly after the occurrence of a surge event.

The occurrence of a surge event produces an overvoltage discharge through the surge arrester 2 that is reflected as an abnormal, sudden increase of the leakage current in the form of a surge pulse.

The amount of time taken for the leakage current to return from the level attained during the surge pulse to normal levels in the following of the surge event is a very powerful indicator on whether or not the arrester is still functioning. Here, normal level refers to the value of leakage current when the surge arrester is an operative, steady state and completely recovered from a surge discharge.

In order to obtain information on how the surge arrester recovers from a surge discharge, the monitoring means 210 is equipped with a recovery monitoring function for monitoring the recovery of the leakage current after the surge event has taken place, the monitoring procedure being performed over a given recovery monitoring period following the surge event.

A recovery monitoring procedure performed by the monitoring device 1 upon detection of an occurrence of a surge event will now be explained with reference to Fig. 3.

After a surge event occurs, the monitoring device 1 initiates the recovery monitoring procedure for monitoring the recovery of the leakage current of the surge arrester 2 over a given monitoring period of time. This data is then used for determining the thermal recovery period or simply the recovery time from this event.

Since surge events only occur occasionally, the monitoring device 1 is preferably equipped with a sleeping mode, during which many of its functions, including the processing of monitoring data, are deactivated for saving energy. Monitoring data is then only processed when the monitoring device 1 is in a waked up mode and the monitoring device 1 is controlled to automatically enter the sleeping mode when data processing is not needed.

Referring to Fig. 3, when a surge event occurs, the surge pulse is detected and the monitoring means 210 acquires the amplitude and width of the surge pulse (S310). The surge pulse may be used as a signal for exiting the monitoring device 1 from the sleeping mode and starting the processing functions, namely, the recovery monitoring procedure (S320).

Once the recovery monitoring procedure is started, the monitoring means 210 acquires an initial measurement of leakage current as well as the time of measurement (S330). Software will send the amplitude and width of the surge pulse to the gateway 14 (S340) before putting the monitoring device 1 to sleep (S350). Date and time stamp of the surge event may also be acquired and sent to the gateway 14. The initial measurement of leakage current and time of measurement may also be sent.

Alternatively, the monitoring means 210 may store the acquired data in the EEPROM and only send them to the gateway 14 at the end of the recovery monitoring procedure.

The monitoring device 1 will then wake up at pre-scheduled intervals (S360) which will initially occur at, for instance, 1 minute, 5 minutes and 10 minutes, for acquiring monitoring data.

During each of these wake up periods, the monitoring device 1 will measure a value indicative of the leakage current along with the time when each measurement occurred (S370) and stores the acquired monitoring data in the storage means (240) as monitoring data.

In order to adapt the quantity of acquired monitoring data to the specific situation, the monitoring means 210 may be equipped with a re-scheduling function for dynamically adjusting or re-scheduling the pre-scheduled time intervals depending on the present recovery rate.

In this case, based on the monitoring data acquired during the preceding wake up periods, the monitoring means 210 tries to determine the rate at which the leakage current is decaying (S380), that is, the recovery rate at the present time, and decides whether to adjust the following wake up periods accordingly (S382).

For example, if over the initial 1 minute period, the leakage current is decaying rapidly, the next wake up periods may be re-scheduled, for instance to 1 minutes, 5 minutes, 10 minutes and so on (S390). If on the other hand the leakage current is decaying more slowly, the next wake up periods may be rescheduled by augmenting them to 10 minutes, 20 minutes, 40 minutes and so on (S390).

The number of possible readings may be limited for the given monitoring time period, for instance, a maximum of 10 possible readings which can occur over a four hour period.

In an alternate embodiment, the monitoring device 1 may be provided without the re-scheduling function or with means for deactivating it. The number and/or duration of the pre-scheduled intervals may then be set by a user and remain fixed during the recovery monitoring procedure.

The monitoring means 210 is further adapted to determine when the leakage current flattens out in order to decide when the recovery of the leakage current is completed and to terminate the recovery monitoring procedure.

As a criteria for deciding when the leakage current has recovered from the surge event, the monitoring means 210 may compare the present estimated recovery rate with a pre-defined threshold value during each wake up period to decide whether the leakage current has reached a plateau (S384). If the present recovery rate has reached or fallen below the threshold value, the monitoring means 210 decides that the leakage current has settled and terminates the recovery monitoring procedure (S392). If the present recovery rate is above the threshold value, the recovery monitoring procedure continues until the end of the monitoring period is reached or the maximum number of readings is attained. In case the recovery rate does not reach or fall below the threshold value within the monitoring period, that is by the end of the recovering monitoring procedure, the monitoring device 1 may send an alert to notify a user.

In addition or alternatively, the maximum duration for a single recovery monitoring procedure may be set to a given thermal recovery period, for instance, four hours. The user can set a different value if required.

Once the recovery monitoring procedure is terminated, all the monitoring data stored in the storage means 240, including measurement values of leakage current data and time of measurement, are sent to the gateway 14.

In an alternative embodiment, the parameters characterizing the surge pulse are stored in the storage means 240 and only sent to the gateway 14 at the end of the recovery monitoring procedure.

In case the monitoring device 1 is not provided with the functions of sleeping mode and waked up mode, the recovering monitoring procedure described above may be implemented without steps S350 and S360. In this case, the monitoring device 1 remains active during the whole recovery monitoring period and is controlled to acquire the monitoring data at the pre-scheduled intervals.

The recovering monitoring procedure described above may be implemented without a preceding surge event, that is, it may be initiated without the detection of a surge event. For instance, the monitoring procedure may be remotely initiated by an operator or by software at a desired time. The monitoring device 1 itself may be equipped with a function that allows to set a date and time at which a monitoring procedure should be started and time duration of the monitoring procedure. In these cases, steps S310 and S340 are omitted.

If a second surge event occurs while a recovery monitoring procedure for a previous surge event is running, that is within the recovery monitoring period and/or before the leakage current has settled, measurements for the previous surge event will cease. The monitoring means 210 then interrupts the running, first recovery procedure and starts a new, second recovery monitoring procedure for the second surge event.

The monitoring data acquired during the incomplete recovery monitoring procedure can be sent to the gateway 14 upon starting the second recovery monitoring procedure or together with the monitoring data for the second surge event at the end of the second procedure. Since the amplitude, width and time of each surge event are also acquired, the monitoring data associated with each surge is well identified.

By acquiring monitoring data on the reduction in the leakage current shortly after the occurrence of a surge event, that is within a few seconds or minutes, over a recovery monitoring period following the surge event, it is possible to estimate recovery parameters that characterize the recovery of the leakage current for that particular surge event, such as recovery time or final recovery current. These parameters provide a good indication on the current deterioration state of the surge arrester 2.

Further, a comparison of the recovery parameters obtained for different surge events over time permits to assert on the evolution of the surge arrester condition.

A monitoring reporting device 400 according to an embodiment of the present invention for reporting on the condition of the surge arrester to a user will now be described with reference to Fig. 4.

The monitoring reporting device 400 comprises a communication member 410 for exchanging data with an external device, for e.g., to receive monitoring data from the monitoring device 1, a memory 420 for storing the received monitoring data, and a reporting means for reporting information concerning the condition of the surge arrester based on the received monitoring data to a user. In the illustrated embodiment the reporting means is a display means 430 for the display of information to a user.

However, the reporting means may be implemented by or comprise other means suitable for reporting information to a user, such as a printer, audio means and the like.

In addition, the monitoring reporting device 400 may comprise a user graphical interface 440 adapted to display information concerning the monitoring device 1, such as a monitoring device readings page, a monitoring device description page, and comprising soft keys 456 for allowing the user to input a request for reporting several kinds of information of the monitoring device 1 and/or for inputting control instructions.

Input means 450 may also be provided in the monitoring reporting device 400 for allowing a user to input instructions, such as control instructions, a request for reporting the monitoring data in a desired correlated form and the like. This input means 450 may be implemented as hard keys 452 in a control panel 454. In addition or alternatively, the input means may be provided in the form of the soft keys 456 that are displayed to the user by the user graphical interface 440. In this case, the display means 430 comprises a touch screen for allowing a direct selection of the soft keys 456 by touch.

The monitoring reporting device 400 further comprises processing means 460 and a software for generating report data indicative of the condition of the surge arrester 2 based on the stored monitoring data. The report data is generated by correlating the monitoring data in the requested form and such as to display this information in the more appropriate manner, for instance, in a graphical or tabular form.

The monitoring reporting device 400 may be provided as a web server based reporting system. Alternatively, the monitoring reporting device 400 may be a handheld device, such as a mobile phone or a PDA, or a portable computer.

The report of the monitoring data in the correlated form allows a user to better assess the evolution of the surge arrester deterioration and identify its health condition.

Fig. 5 shows a view of an Arrester Details Screen 500 according to an embodiment of the present invention.

The Arrester Details Screen 500 may contain several arrester information fields 510 for providing information concerning the surge arrester 2 being monitored, such as arrester manufacturer, year of manufacture, and the like, and monitoring device information fields 520 for providing information on the monitoring device 1 being used, such as battery voltage, status, last reading date and the like.

The Arrester Details Screen 500 may include an alarm settings field 530 showing threshold parameters for a surge pulse above which an alarm message is sent to the user or operator such as maximum surge amplitude level and minimum surge width alarm level. The alarm settings field 530 may allow the user to set new threshold parameters.

The Arrester Details Screen 500 may include a number of active input fields or links 540 for allowing a user to request the report of the monitoring data in a desired form.

For instance, an input field "View Surge Readings for this Surge Arrester" 542 may be provided for requesting display of monitoring parameters concerning the surge events occurred for this surge arrester.

When the user clicks on this input field, the processing means 460 causes the display of a screen view showing parameters of the surge pulses occurred over a certain period of time.

Fig. 6 illustrates a view of a Surge Readings Screen 600 according to an embodiment of the present invention.

The Surge Readings Screen 600 may be obtained when the user clicks on the input field "View Surge Readings for this Surge Arrester" 542 on the Arrester Details Screen 500 illustrated in Fig. 5.

As can be seen in Fig. 6, information on the surge events detected between a certain period of time, for instance, from 16/10/2009 to 29/09/2009, are shown in tabular form as a function of time of the event. This information is organized in columns showing width of the surge pulse 602, surge amplitude 604, reading date 606 and reading time 608 of the surge pulse. The number of surge events to be shown in one single view may be set by the user. The Surge Readings Screen 600 may include Scrolling icons 612 to allow the user to scroll through the list of recorded surge events.

The Surge Readings Screen 600 may include an input field "Back to previous page" 610 to allow the user to return to the Arrester Details Screen 500 by simply clicking on this input field.

In addition, the Surge Readings Screen 600 may include an input field "View Leakage Current" 620 for requesting that the monitoring data acquired for a particular surge event be shown.

For instance, the user may request to view monitoring data of the leakage current acquired over a period of time following the surge event that occurred at 11:25:59:000 on 16/10/2009 by clicking on the corresponding input field 620. The processing means 460 then causes a Leakage Current Recovery Screen 700 to be displayed showing the values of leakage current and time of measurement acquired following that particular surge event.

Fig. 7 illustrates a view showing a Leakage Current Recovery Screen for a surge event according to an embodiment of the present invention.

The Leakage Current Recovery Screen 700, which is an example of a report data page of the present invention, reports information concerning the leakage current recovery from a surge event. In particular, the Leakage Current Recovery Screen 700 shows measurement values of leakage current and time of measurement acquired during the recovery monitoring period after the surge event.

Based on the respective monitoring data, the processing means 460 performs processing for displaying a graph 710 of the leakage current values measured during the thermal recovery period as a function of time, and estimates a $t_{10}$ value, which is the time when the leakage current reaches 10% of its final value. The leakage current which exists at this time is calculated by the processing means 460 as follows:

$$\text{Final Leakage Current} + [(\text{Leakage Current at 1 Minute} - \text{Final Leakage Current}) \times 0.1)]$$

To calculate the time when this occurs, a linear interpolation is performed on the measurements taken. For example, if it is found that the leakage current at time $t_{10}$ lies between the leakage current samples taken at times $t_x$ and ty, then $t_{10}$ is calculated as follows:

$$t_{10} = t_x + (\text{Leakage Current at } t_x - \text{Leakage Current at } t_{10}) / m \text{ ,}$$

where

$$m = (\text{Leakage Current at } t_x - \text{Leakage Current at } t_y) / (t_y - t_x)$$

The estimated $t_{10}$ time and value of leakage current may also be shown in the Leakage Current Recovery Screen 700.

The Leakage Current Recovery Screen 700 may also display the pulse amplitude and width of the surge pulse along with the date and time of the surge event.

The scale of the leakage current axis and of the time axis may be automatically adjusted to the values of the monitoring data or may be set by the user. The leakage Current Recovery graph 710 may also be displayed when the user presses a button 466 on the control panel 454 or an input key while the Arrester Details Screen is being displayed. If two surges have occurred within four hours of each other, the graph may display the leakage currents of both surges over time.

If a second surge event occurred within the thermal recovery period (before the leakage current has settled), the acquisition of monitoring data for the previous surge event is not complete.

In this case, the monitoring reporting device 400 will be unable to calculate a time $t_{10}$ for the first surge since there will be an insufficient number of measurements available. The readings taken, however, are of benefit to the monitoring reporting device 400 which can analyze the data and determine that the two surge events occurred within close proximity of each other.

The Leakage Current Recovery Screen 700 may also include a "Back to previous page" input field 720 that allows the user to go back to the Arrester Details Screen 500.

From the Arrester Details Screen 500, the user may also request to view all leakage current readings for the same surge arrester. In the illustrated embodiment, this can be done by clicking on the input field "View Leakage Current Readings for this Surge Arrester" 544.

Fig. 8 illustrates a view of a Leakage Current Readings Screen 800 obtained when the user clicks on the input field "View Leakage Current Readings for this Surge Arrester" 544 on the Arrester Details Screen 500 illustrated in Fig. 5.

As can be seen from Fig. 8, the monitoring data acquired for the surge arrester 2, in the present case, the leakage current, ambient temperature and humidity are displayed as a function of the time at which the measurements were acquired in the form of a table. The leakage current values may also be displayed in a leakage current graph 805 as a function of time of measurement.

Additional input fields may also be provided to allow a user to select the range of data to be displayed. For instance, a Start Date input field 810 and an End Date input field 820 for setting a time range of the monitoring data to be displayed. An input field "Display All Leakage currents" 830 for requesting that all leakage currents be displayed may also be provided.

The Leakage Current Readings Screen 800 may also include an input field "Back to previous page" 840 to allow the user to return to the Arrester Details Screen 500 by clicking on this input field.

On the Arrester Details Screen 500 an input key 546 or link may be displayed for allowing the user to request the display of historical data about the health of the surge arrestor. On pressing this button 546 or link, a table will be displayed showing a correlation between temperature, humidity and leakage currents over a period of time. An example thereof is shown in Table 1.

Table 1 shows report data that is generated based on the acquired monitoring data and organized such as to be displayed according to temperature band and humidity band. For instance, the report data may include the total number of readings N, an average peak current (Initial Average Peak) for the initial readings in the range of readings, an average peak current (Current Average Peak) for the current or most recent set of readings in the range, the number of days between the initial reading and current reading (Date Range), and the rate of change.

Table 1

| Temp. Band<br><br>°C | Humidity Band<br><br>%RH | N | Initial Average Peak<br><br>mA | Current Average Peak<br><br>mA | Ratio between current and initial<br>Ratio | Current Delta<br><br>mA | Date range<br><br>Days | Rate of change<br><br>x $10^{-3}$ mA/day |
|---|---|---|---|---|---|---|---|---|
| 15-20 | 65-80 | 220 | 5 | 6.1 | 1.22 | 1.1 | 245 | 4.490 |
| 15-20 | 60-65 | 80 | 2.2 | 3.5 | 1.59 | 1.3 | 255 | 5.098 |

The processing means 460 will group each of the sensor readings and report data into a particular temperature and humidity band or interval. The temperature ranges from -20°C to +60°C with a default grouping of 5°. The relative humidity ranges from 0% to 100% with a default grouping of 10%. These default groupings may be adjusted by the user on the monitoring reporting device 400.

Using the default grouping ranges a total of 260 unique combinations of environmental conditions could exist. For each of these combinations the values of leakage current and time are assigned and the combinations are sorted in descending order of number of records with the top 10 combinations displayed for further analysis. If more than 20 records exist within a combination then the average of the first 10 and average of the last 10 records are also displayed to indicate a possible trend/change with difference in median dates.

Fig. 9 shows a view of a Leakage Current Analysis Screen 900 for a surge arrester according to an embodiment of the present invention.

When the user clicks on the input field "Leakage Current Analysis for this Surge Arrester" 546, the screen view illustrated in Fig. 9 is displayed to the user, showing the monitoring data in the correlated tabular form as described above.

Additional input fields may be provided in the Leakage Current Analysis Screen 900 to allow a user to select the range of data to be displayed. For instance, a Start Date input field 910 and an End Date input field 920 to set a time range of the monitoring data to be displayed. In addition, a Temperature Step input field 930 and an Humidity Step input field 940 may be provided for setting the step of the temperature and humidity bands as shown in table 1. A "Back to previous page" input field 950 may be provided for returning to the Arrester Details Screen 500.

The user may request to view the leakage current values for a given temperature band and humidity band by selecting the respective "View" input field.

For instance, when the user selects the "View" input field 960 corresponding to the temperature band of 20°C to 25°C and the humidity band of 55% to 60%, a screen view as illustrated in Fig. 10 is shown to the user.

Fig. 10 illustrates a view of a Leakage Current Screen 1000 obtained when a user selects "View" on the view illustrated in Fig. 9.

As can be seen from Fig. 10, the leakage current, ambient temperature and humidity are displayed as a function of the time at which the measurements were acquired in a table 1010. In addition, the leakage current values may also be displayed as a function of time of measurement in a Leakage Current graph 1020.

An input field "Back to previous page" 1030 may be provided on this screen 1000 to allow the user to return to the Arrester Details Screen 500.

In addition, on the Arrester Details Screen 500 a button or link may be displayed for allowing the user to display historical data about the arrester thermal recovery period. On pressing this button or link, the processing means 460 will generate report data showing a correlation between temperature, humidity and the recovery time $t_{10}$ over a period of time. An example of the generated report data thereof is shown in Table 2.

Table 2 shows report data that is generated based on the acquired monitoring data and organized according to temperature band and humidity band. The report data may include Impulse of the surge event, calculated as the product of the surge width by the surge amplitude, initial recovery time $t_{10}$ estimated for the initial surge event of the range of readings, current recovery time $t_{10}$ for the current or most recent surge event, the number of days between the initial reading and current reading (Date Range), and the rate of change of the recovery time.

Table 2

| Temp Band °C | Humidity Band %RH | Impulse Amps | Number readings | Initial $t_{10}$ min | Current $t_{10}$ min | $\Delta t_{10}$ min | Date Range Days | $t_{10}$ rate of change x $10^{-3}$min/day |
|---|---|---|---|---|---|---|---|---|
| 15-20 | 65-80 | 1.5 | 120 | 4 | 6.1 | 2.1 | 245 | 8.561 |
| 15-20 | 60-65 | 1.2 | 80 | 4.5 | 6.6 | 2.2 | 255 | 8.626 |

Fig. 11 shows a view of a Thermal Recovery Analysis Screen 1100 for a surge arrester according to an embodiment of the present invention.

When the user clicks on the input field "Thermal Recovery Analysis for this Surge Arrester" 548, the screen view displayed in Fig. 11 is displayed showing the generated report data in a Recovery Data table 1105 as described above.

Input fields similar to those described for the Leakage Current Analysis Screen 900 may be provided, such as a Start Date input field 1110, an End Date input field 1120, a Temperature Step input field 1130, an Humidity Step input field 1140, and a "Back to previous page" input field 1150.

From the Thermal Recovery Analysis Screen 1100, the user may also request to view the leakage current values for a given temperature band and humidity band by selecting the respective "View" input field.

For instance, when the user selects the "View" input field 1160 corresponding to the temperature band of 20°C to 25°C and the humidity band of 55% to 60%, a screen view illustrated in Fig. 12 is shown.

Fig. 12 shows a view of a Recovery Time Data Screen 1200 showing the evolution of the recovery time with the occurrence of surge events.

As can be seen from Fig. 12, the width and amplitude of the surge pulse, the ambient temperature and humidity, and the estimated recovery time $t_{10}$ for each surge event are displayed as a function of the time at which the measurements were acquired in a Recovery Time data table 1210. In addition, the recovery time $t_{10}$ estimated for each surge event may also be displayed in a Recovery Time data graph 1220 as a function of time. An alarm limit for the value of the recovery time $t_{10}$ may also be displayed. The value of this alarm threshold may be set by the user through an "Alarm Threshold" input field 1240

An input field "Back to previous page" 1230 may be provided on this screen 1200 to allow the user to return to the Arrester Details Screen 500.

The present invention also provides a monitoring system 1300 that allows to monitor one or more surge arresters simultaneously and to give remote access to several users or operators to the monitoring data of one or more surge arresters.

Fig. 13 illustrates a monitoring system according to an embodiment of the present invention.

The monitoring system 1300 comprises one or more monitoring devices 1 for monitoring one or more surge arresters and a programmable access controller 14 for handling communications among each monitoring device 1 and one or more terminal devices 1310 at the user side for processing and reporting the monitoring data to the user.

In the illustrated embodiment, the external conditions measurement unit 230 is provided separate from the monitoring device 1 and is connected to the gateway 14. In this case, the measurements of external conditions may be acquired by the monitoring device 1 through the gateway 14. Alternatively, the measurements acquired by the external conditions measurement unit 230 may be transmitted by the gateway 14 directly to the terminal device 1310. The programmable access controller or gateway 14 may comprise any communication means suitable for exchanging data and/or control information with the monitoring device 1 and/or the terminal devices 1310, via a communication network 1320 by wireless communications, cable communications, internet, an antenna, etc.

The terminal device 1310 may be a monitoring reporting device 400 according to the invention, or a personal computer, a handheld personal device such as a PDA, a remote monitoring station and the like.

The monitor system 1300 may also comprise one or more of the terminal devices 1310, such as the monitoring reporting device 400.

The present invention is not limited to the above described embodiments and several modifications can be envisaged without departing from the scope of the invention.

For instance, although the leakage current measurement unit 220 has been described as being comprised in the monitoring device 1, an alternative configuration can be envisaged in which the leakage current measurement unit 220 is provided as a separate device that directly connects to the grounding line 5, and provided with an communication interface for exchanging control and measurement data with the monitoring device 1.

The monitoring technique according to the present invention is suitable for monitoring different types of surge arrester such as polymeric surge arresters and porcelain transmission surge arresters for use in medium to high voltage applications, and low voltage arresters like the MOV (Metal Oxide Varistor).

Although the above embodiments were described in view of applications to the field of surge arresters, a person skilled in the art will readily recognize that the present invention may be used with advantage for other applications. Namely, the present invention may be used for monitoring condition or operative state of devices other than surge arresters, where the evolution of their condition over time can be assessed by the time variation of a monitoring current or voltage.

REFERENCE NUMERAL LIST

| Reference Numeral | Description |
|---|---|
| 1 | monitoring device |
| 2 | surge arrester |
| 3 | lower part of surge arrester |
| 4 | insulating base of surge arrester |
| 5 | grounding line of surge arrester |
| 6 | line connector of monitoring device |
| 7 | ground connector of monitoring device |
| 8 | earth connection cable of monitoring device |
| 9 | housing of monitoring device |
| 10 | moulded resin insulating part |
| 11 | antenna of monitoring device |
| 14 | programmable access controller or gateway |
| 210 | monitoring means |
| 212 | processor |
| 214 | timer unit |
| 220 | leakage current measurement unit |
| 230 | external conditions measurement unit |
| 232 | temperature sensor |
| 234 | hygrometer |
| 240 | storage means |
| 250 | surge event detection unit |
| 260 | communication unit |
| 400 | monitoring reporting device |
| 410 | communication member |
| 420 | memory means |
| 430 | display means |

(continued)

| Reference Numeral | Description |
|---|---|
| 440 | user graphical interface |
| 456 | soft keys |
| 450 | input means |
| 452 | hard keys |
| 454 | control panel |
| 460 | processing means |
| 500 | Arrester Details Screen |
| 510 | information fields in the Arrester Details Screen |
| 520 | monitoring device information fields |
| 530 | alarm settings field |
| 540 | active input field |
| 542 | input field "View Surge Readings for this Surge Arrester" |
| 544 | input field "View Leakage Readings for this Surge Arrester" |
| 546 | input field "Leakage Current Analysis for this Surge Arrester" |
| 548 | input field "Thermal Recovery Analysis for this Surge Arrester" |
| 600 | Surge Readings Screen |
| 602 | width of surge pulse column |
| 604 | surge amplitude column |
| 606 | reading date column |
| 608 | reading time column |
| 610 | input field "Back to previous page" |
| 612 | scrolling icons |
| 620 | input field "View Leakage Current" |
| 700 | Leakage Current Recovery Screen |
| 710 | Leakage Current Recovery graph |
| 720 | input field "Back to previous page" |
| 800 | Leakage Current Readings Screen |
| 805 | Leakage current graph |
| 810 | Start Date input field |
| 820 | End Date input field |
| 830 | Input field "Display all leakage currents" |
| 840 | Input field "Back to previous page" |
| 900 | Leakage Current Analysis Screen |
| 910 | Start Date input field |
| 920 | End Date input field |
| 930 | Temperature Step input field |
| 940 | Humidity Step input field |
| 950 | "Back to previous page" input field |

(continued)

| Reference Numeral | Description |
|---|---|
| 960 | "View" input field |
| 1000 | Leakage Current Screen |
| 1010 | data table |
| 1020 | Leakage Current graph |
| 1030 | input field "Back to previous page" |
| 1100 | Thermal Recovery Analysis Screen |
| 1105 | Recovery Data table |
| 1110 | Start Date input field |
| 1120 | End Date input field |
| 1130 | Temperature Step input field |
| 1140 | Humidity Step input field |
| 1150 | "Back to previous page" input field |
| 1160 | "View" input field |
| 1200 | Recovery Time Data Screen |
| 1210 | Recovery Time data table |
| 1220 | Recovery Time data graph |
| 1230 | "Back to previous page" input field |
| 1240 | "Alarm Threshold" input field |
| 1300 | monitoring system |
| 1310 | terminal device |
| 1320 | communication network |

## Claims

**1.** A monitoring device for monitoring a condition of a surge arrester (2), comprising:

a monitoring means (210) adapted to monitor leakage current of the surge arrester (2) over a monitoring period;
**characterised in that**
the monitoring means (210) is further adapted to monitor a leakage current recovery of the surge arrester (2) after an occurrence of a surge event,
wherein the monitoring period is a recovery monitoring period following the surge event.

**2.** A monitoring device according to claim 1, further comprising:

an external conditions measurement unit (230) adapted to measure at least one of ambient temperature and relative humidity, wherein
said monitoring means (210) is adapted to acquire the measured ambient temperature and/or relative humidity as monitoring data.

**3.** A monitoring device according to claim 1 or claim 2, further comprising:

a leakage current measurement unit (220) adapted to measure a signal indicative of the leakage current that flows through a grounding line (5) of the surge arrester (2);
and

a timer unit (214) adapted to provide time information concerning actions performed by the monitoring device to perform required actions;
wherein the monitoring means (210) is adapted to acquire monitoring data from the leakage current measurement unit (220) and the timer unit (214) at pre-scheduled time intervals during the monitoring period,
the monitoring data including a measurement value of leakage current and a time of measurement.

**4.** A monitoring device according to claim 3, wherein the leakage current measurement unit (220) further comprises:

a planar magnetic current sensor adapted to measure intensity of the signal indicative of the leakage current; and an electromagnetic shield arranged around the planar magnetic current sensor and
adapted to protect the planar magnetic current sensor from external electromagnetic effects due to surge events.

**5.** A monitoring device according to claim 3 or claim 4, wherein:

the leakage current measurement unit (220) further comprises a third harmonic measurement unit adapted to measure a third harmonic component of the signal indicative of the leakage current.

**6.** A monitoring device according to any one of claims 3 to 4, wherein:

the monitoring means (210) is further adapted to estimate a recovery rate for the leakage current based on the measurement values of leakage current and the respective time of measurement acquired during the monitoring period,
wherein the recovery rate provides an indication of the surge arrester condition.

**7.** A monitoring device according to any one of claims 3 to 6, wherein:

the monitoring means (210) is adapted to perform during the monitoring period at least one of:

dynamically re-scheduling the pre-scheduled time intervals based on the estimated recovery rate, and terminate monitoring of the leakage current recovery when the estimated recovery rate is below a threshold value.

**8.** A monitoring device according to any one of claims 1 to 7, wherein:

the monitoring means (210) is adapted to interrupt monitoring of a first leakage current recovery following a first surge event if a second surge event occurs meanwhile and to start monitoring of a second leakage current recovery for the second surge event.

**9.** A monitoring device according to any one of claims 1 to 8, further comprising:

a surge event detection unit (250) adapted to detect a surge pulse and to measure amplitude and width of the surge pulse, wherein
the monitoring means (210) is adapted to acquire the measured amplitude and width of the surge pulse as monitoring data.

**10.** A monitoring device according to any one of claims 1 to 9, comprising:

storage means (240) adapted to store monitoring data acquired by the monitoring means (210) during the monitoring period; and
communication means (260) adapted to transmit the monitoring data to a receiver (6);
wherein the stored monitoring data is transmitted to the receiver (6) when the monitoring period terminates.

**11.** A monitoring reporting device for reporting on a condition of a surge arrester (2), comprising:

a communication member (410) adapted to receive monitoring data from a monitoring device,
a memory means (420) adapted to store the received monitoring data;
input means (450, 452, 454) adapted to detect a request for reporting on the condition of the surge arrester (2);
processing means (460) adapted to generate report data indicative of the condition of the surge arrester (2) based on the monitoring data; and
a reporting means (430) adapted to report the report data;
**characterized in that**
the monitoring data includes values of measurement of a signal indicative of a leakage current acquired during a recovery monitoring period and respective times of measurement,
the input means (450, 452, 454) are adapted to allow input of a request for reporting on the recovery of leakage current, and
the processing means (460) are adapted to estimate a recovery time of leakage current based on the monitoring data and to cause the reporting means (430) to report the monitoring data and the estimated recovery time as a function of time;
wherein the estimated recovery time provides an indication of the surge arrester condition.

**12.** A monitoring reporting device according to claim 11, wherein:

the monitoring data includes values of measurement of a signal indicative of the leakage current, and of at least one of ambient temperature and relative humidity;
the input means (450, 452, 454) are adapted to allow input of a request for reporting leakage current as a function of external conditions; and
the processing means (460) are adapted to correlate the monitoring data based on the at least one of ambient temperature and relative humidity for generating the report data, and to cause the reporting means (430) to report the report data in a tabular form.

**13.** A monitoring system for monitoring a condition of a surge arrester, comprising:

a monitoring device according to any one of claims 1 to 10; and
a programmable access controller (14) for handling communications among the monitoring device and a receiver.

**14.** A method for monitoring a condition of a surge arrester (2) **characterized by**
comprising the step of acquiring monitoring data of a leakage current recovery of the surge arrester (2) over a recovery monitoring period.

**15.** The method according to claim 14, further comprising the steps of:

generating report data indicative of the condition of the surge arrester (2) based on the monitoring data; and
reporting the report data;
wherein said monitoring data includes measurement values of leakage current and respective times of measurement.

## Patentansprüche

**1.** Überwachungsvorrichtung zur Überwachung eines Zustands eines Überspannungsschutzes (2), umfassend:

ein Überwachungsmittel (210), das angepasst ist, um den Leckstrom des Überspannungsschutzes (2) über eine Überwachungsperiode zu überwachen;
**dadurch gekennzeichnet, dass**
das Überwachungsmittel (210) weiter angepasst ist, um eine Leckstrom-Wiederherstellung des Überspannungsschutzes (2) nach dem Auftreten eines Überspannungsstoß-Ereignisses zu überwachen,
wobei die Überwachungsperiode eine Wiederherstellungs-Überwachungsperiode ist, die auf das Überspannungsstoß-Ereignis folgt.

**2.** Überwachungsvorrichtung nach Anspruch 1, weiter umfassend:

eine Außenzustand-Messeinheit (230), die angepasst ist, um mindestens eines von Umgebungstemperatur und relativer Feuchtigkeit zu messen, wobei
das Überwachungsmittel (210) angepasst ist, um die gemessene Umgebungstemperatur und/oder relative Feuchtigkeit als Überwachungsdaten zu erlangen.

3. Überwachungsvorrichtung nach Anspruch 1 oder Anspruch 2, weiter umfassend:

eine Leckstrom-Messeinheit (220), die angepasst ist, um ein Signal zu messen, das den Leckstrom anzeigt, der durch eine Erdungsleitung (5) des Überspannungsschutzes (2) fließt; und
eine Zeitgebereinheit (214), die angepasst ist, um Zeitinformationen hinsichtlich von Aktionen, die von der Überwachungsvorrichtung durchgeführt wurden, bereitzustellen, um erforderliche Aktionen durchzuführen;
wobei das Überwachungsmittel (210) angepasst ist, um Überwachungsdaten von der Leckstrom-Messeinheit (220) und der Zeitgebereinheit (214) zu im Voraus terminierten Zeitintervallen während der Überwachungsperiode zu erlangen,
wobei die Überwachungsdaten einen Messwert des Leckstroms und eine Zeit der Messung enthalten.

4. Überwachungsvorrichtung nach Anspruch 3, wobei die Leckstrom-Messeinheit (220) weiter umfasst:

einen planaren magnetischen Stromsensor, der angepasst ist, um die Intensität des Signals, das den Leckstrom anzeigt, zu messen; und
eine elektromagnetische Abschirmung, die um den planaren magnetischen Stromsensor angeordnet ist und angepasst ist, um den planaren magnetischen Stromsensor vor äußeren elektromagnetischen Wirkungen aufgrund von Überspannungsstoß-Ereignissen zu schützen.

5. Überwachungsvorrichtung nach Anspruch 3 oder Anspruch 4, wobei:

die Leckstrom-Messeinheit (220) weiter eine Messeinheit für die dritte Oberwelle umfasst, die angepasst ist, um eine dritte Oberwellenkomponente des Signals, das den Leckstrom anzeigt, zu messen.

6. Überwachungsvorrichtung nach einem der Ansprüche 3 bis 4, wobei:

das Überwachungsmittel (210) weiter angepasst ist, um eine Wiederherstellungsrate für den Leckstrom basierend auf den Messwerten des Leckstroms und der jeweiligen Zeit der Messung, die während der Überwachungsperiode erlangt werden, zu schätzen,
wobei die Wiederherstellungsrate eine Anzeige des Zustands des Überspannungsschutzes bereitstellt.

7. Überwachungsvorrichtung nach einem der Ansprüche 3 bis 6, wobei:

das Überwachungsmittel (210) angepasst ist, um mindestens eines von Folgendem während der Überwachungsperiode durchzuführen:

dynamisches Neuterminieren der im Voraus terminierten Zeitintervalle basierend auf der geschätzten Wiederherstellungsrate, und
Beenden der Überwachung der Leckstrom-Wiederherstellung, wenn die geschätzte Wiederherstellungsrate unter einem Schwellenwert ist.

8. Überwachungsvorrichtung nach einem der Ansprüche 1 bis 7, wobei:

das Überwachungsmittel (210) angepasst ist, um die Überwachung einer ersten Leckstrom-Wiederherstellung folgend auf ein erstes Überspannungsstoß-Ereignis zu unterbrechen, wenn ein zweites Überspannungsstoß-Ereignis in der Zwischenzeit vorkommt, und um die Überwachung einer zweiten Leckstrom-Wiederherstellung für das zweite Überspannungsstoß-Ereignis zu starten.

9. Überwachungsvorrichtung nach einem der Ansprüche 1 bis 8, weiter umfassend:

eine Überspannungsstoß-Ereignis-Detektionseinheit (250), die angepasst ist, um einen Überspannungsstoßimpuls zu detektieren und um die Amplitude und Breite des Überspannungsstoßimpulses zu messen, wobei
das Überwachungsmittel (210) angepasst ist, um die gemessene Amplitude und Breite des Überspannungsstoßimpulses als Überwachungsdaten zu erlangen.

10. Überwachungsvorrichtung nach einem der Ansprüche 1 bis 9, umfassend:

Speichermittel (240), angepasst zum Speichern von Überwachungsdaten, die von dem Überwachungsmittel (210) während der Überwachungsperiode erlangt wurden; und
Kommunikationsmittel (260), angepasst zum Übertragen der Überwachungsdaten an einen Empfänger (6);
wobei die gespeicherten Überwachungsdaten an den Empfänger (6) übertragen werden, wenn die Überwachungsperiode endet.

**11.** Überwachungs-Berichterstattungsvorrichtung zum Erstatten eines Berichts über einen Zustand eines Überspannungsschutzes (2), umfassend:

ein Kommunikationsglied (410), angepasst zum Empfangen von Überwachungsdaten von einer Überwachungsvorrichtung,
ein Speichermittel (420), angepasst zum Speichern der empfangenen Überwachungsdaten;
Eingabemittel (450, 452, 454), angepasst zum Detektieren einer Anforderung zur Berichterstattung über den Zustand des Überspannungsschutzes (2);
Verarbeitungsmittel (460), angepasst zum Erzeugen von Berichtdaten, die den Zustand des Überspannungsschutzes (2) anzeigen, basierend auf den Überwachungsdaten; und
ein Berichterstattungsmittel (430), angepasst zur Berichterstattung der Berichtdaten;
**dadurch gekennzeichnet, dass**
die Überwachungsdaten Messwerte eines Signals, das einen Leckstrom anzeigt, erlangt während einer Wiederherstellungs-Überwachungsperiode, und jeweilige Zeiten der Messung enthalten,
wobei die Eingabemittel (450, 452, 454) angepasst sind, um Eingabe einer Anforderung zur Berichterstattung über die Wiederherstellung des Leckstroms zu gestatten, und
die Verarbeitungsmittel (460) angepasst sind, um eine Wiederherstellungszeit des Leckstroms basierend auf den Überwachungsdaten zu schätzen und zu bewirken, dass das Berichterstattungsmittel (430) die Überwachungsdaten und die geschätzte Wiederherstellungszeit als eine Funktion der Zeit berichtet;
wobei die geschätzte Wiederherstellungszeit eine Anzeige des Zustands des Überspannungsschutzes bereitstellt.

**12.** Überwachungs-Berichterstattungsvorrichtung nach Anspruch 11, wobei:

die Überwachungsdaten Messwerte eines Signals, das den Leckstrom anzeigt, und mindestens eines von Umgebungstemperatur und relativer Feuchtigkeit enthalten;
die Eingabemittel (450, 452, 454) angepasst sind, um Eingabe einer Anforderung zur Berichterstattung des Leckstroms als eine Funktion von äußeren Zuständen zu gestatten; und
die Verarbeitungsmittel (460) angepasst sind, um die Überwachungsdaten basierend auf dem mindestens einen der Umgebungstemperatur und der relativen
Feuchtigkeit zu korrelieren, um die Berichtdaten zu erzeugen und um zu bewirken, dass das Berichterstattungsmittel (430) die Berichtdaten in einer Tabellenform berichtet.

**13.** Überwachungssystem zum Überwachen eines Zustands eines Überspannungsschutzes, umfassend:

eine Überwachungsvorrichtung nach einem der Ansprüche 1 bis 10; und
eine programmierbare Zugangssteuerung (14) zur Handhabung von Kommunikationen zwischen der Überwachungsvorrichtung und einem Empfänger.

**14.** Verfahren zum Überwachen eines Zustands eines Überspannungsschutzes (2),
**gekennzeichnet durch**
Umfassen des Schritts des Erlangens von Überwachungsdaten einer Leckstrom-Wiederherstellung des Überspannungsschutzes (2) über eine Wiederherstellungs-Überwachungsperiode.

**15.** Verfahren nach Anspruch 14, weiter die folgenden Schritte umfassend:

Erzeugen von Berichtdaten, die den Zustand des Überspannungsschutzes (2) basierend auf den Überwachungsdaten anzeigen; und
Berichten der Berichtdaten;
wobei die Überwachungsdaten Messwerte des Leckstroms und der jeweiligen Zeiten der Messung enthalten.

## Revendications

1. **1.** Dispositif de surveillance pour surveiller une condition d'un coupe-circuit de surtension (2), comprenant :

   un moyen de surveillance (210) adapté pour surveiller le courant de fuite du coupe-circuit de surtension (2) sur une période de surveillance ;
   **caractérisé en ce que** :

   le moyen de surveillance (210) est en outre adapté pour surveiller un recouvrement de courant de fuite du coupe-circuit de surtension (2) après une occurrence d'un évènement de surtension,
   dans lequel la période de surveillance est une période de surveillance de recouvrement suite à l'évènement de surtension.

2. **2.** Dispositif de surveillance selon la revendication 1, comprenant en outre :

   une unité de mesure de conditions externes (230) adaptée pour mesurer au moins l'une parmi la température ambiante et l'humidité relative, dans lequel :

   ledit moyen de surveillance (210) est adapté pour acquérir la température ambiante et/ou l'humidité relative mesurées, en tant que données de surveillance.

3. **3.** Dispositif de surveillance selon la revendication 1 ou la revendication 2, comprenant en outre :

   une unité de mesure de courant de fuite (220) adaptée pour mesurer un signal indicatif du courant de fuite qui circule dans une ligne de mise à la terre (5) du coupe-circuit de surtension (2) ; et
   un temporisateur (214) adapté pour fournir une information temporelle concernant les actions réalisées par le dispositif de surveillance afin de réaliser les actions requises ;
   dans lequel le moyen de surveillance (210) est adapté pour acquérir des données de surveillance à partir de l'unité de mesure de courant de fuite (220) et le temporisateur (214) à intervalles de temps préétablis pendant la période de surveillance,
   les données de surveillance comprenant une valeur de mesure de courant de fuite et un temps de mesure.

4. **4.** Dispositif de surveillance selon la revendication 3, dans lequel l'unité de mesure de courant de fuite (220) comprend en outre :

   un capteur de courant magnétique plan adapté pour mesurer l'intensité du signal indicatif du courant de fuite ; et
   un blindage électromagnétique agencé autour du capteur de courant magnétique plan et adapté pour protéger le capteur de courant magnétique plan des effets électromagnétiques externes dus aux évènements de surtension.

5. **5.** Dispositif de surveillance selon la revendication 3 ou la revendication 4, dans lequel :

   l'unité de mesure de courant de fuite (220) comprend en outre une unité de mesure de troisième harmonique adaptée pour mesurer un composant de troisième harmonique du signal indicatif du courant de fuite.

6. **6.** Dispositif de surveillance selon l'une quelconque des revendications 3 à 4, dans lequel :

   le moyen de surveillance (210) est en outre adapté pour estimer un taux de recouvrement du courant de fuite basé sur les valeurs de mesure du courant de fuite et le temps de mesure respectif acquis pendant la période de surveillance,
   dans lequel le taux de recouvrement fournit une indication de la condition du coupe-circuit de surtension.

7. **7.** Dispositif de surveillance selon l'une quelconque des revendications 3 à 6, dans lequel :

   le moyen de surveillance (210) est adapté pour réaliser, pendant la période de surveillance, au moins une étape suivante consistant à :

   reprogrammer dynamiquement les intervalles de temps préprogrammés basés sur le taux de recouvrement estimé, et
arrêter la surveillance du recouvrement de courant de fuite lorsque le taux de recouvrement estimé est inférieur à une valeur de seuil.

**8.** Dispositif de surveillance selon l'une quelconque des revendications 1 à 7, dans lequel :

le moyen de surveillance (210) est adapté pour interrompre la surveillance d'un premier recouvrement de courant de fuite suite à un premier évènement de surtension si un second évènement de surtension se produit en même temps et pour commencer la surveillance d'un second recouvrement de courant de fuite pour le second évènement de surtension.

**9.** Dispositif de surveillance selon l'une quelconque des revendications 1 à 8, comprenant en outre :

une unité de détection d'évènement de surtension (250) adaptée pour détecter une impulsion de surtension et pour mesurer l'amplitude et la largeur de l'impulsion de surtension, dans lequel :

le moyen de surveillance (210) est adapté pour acquérir l'amplitude et la largeur mesurées de l'impulsion de surtension, en tant que données de surveillance.

**10.** Dispositif de surveillance selon l'une quelconque des revendications 1 à 9, comprenant :

des moyens de stockage (240) adaptés pour stocker des données de surveillance acquises par le moyen de surveillance (210) pendant la période de surveillance ; et
des moyens de communication (260) adaptés pour transmettre les données de surveillance à un récepteur (6) ;
dans lequel les données de surveillance stockées sont transmises au récepteur (6) lorsque la période de surveillance s'achève.

**11.** Dispositif de compte-rendu de surveillance pour faire le compte-rendu d'une condition d'un coupe-circuit de surtension (2), comprenant :

un élément de communication (410) adapté pour recevoir des données de surveillance d'un dispositif de surveillance,
un moyen de mémoire (420) adapté pour mémoriser les données de surveillance reçues ;
des moyens d'entrée (450, 452, 454) adaptés pour détecter une requête de compte-rendu concernant la condition du coupe-circuit de surtension (2) ;
des moyens de traitement (460) adaptés pour générer des données de compte-rendu indicatives de la condition du coupe-circuit de surtension (2) basées sur les données de surveillance ; et
un moyen de compte-rendu (430) adapté pour faire le compte-rendu des données de compte-rendu ;
**caractérisé en ce que**:

les données de surveillance comprennent des valeurs de mesure d'un signal indicatif d'un courant de fuite acquis pendant une période de surveillance de recouvrement et des temps respectifs de mesure,
les moyens d'entrée (450, 452, 454) sont adaptés pour permettre l'entrée d'une requête pour faire le compte-rendu du recouvrement du courant de fuite, et
les moyens de traitement (460) sont adaptés pour estimer un temps de recouvrement du courant de fuite basé sur les données de surveillance et pour amener le moyen de compte-rendu (430) à faire un compte-rendu des données de surveillance et du temps de recouvrement estimé en fonction du temps ;
dans lequel le temps de recouvrement estimé fournit une indication de la condition du coupe-circuit de surtension.

**12.** Dispositif de compte-rendu de surveillance selon la revendication 11, dans lequel :

les données de surveillance comprennent des valeurs de mesure d'un signal indicatif du courant de fuite, et de l'une parmi la température ambiante et l'humidité relative ;
les moyens d'entrée (450, 452, 454) sont adaptés pour permettre l'entrée d'une requête pour faire le compte-rendu du courant de fuite en fonction des conditions externes ; et
les moyens de traitement (460) sont adaptés pour corréler les données de surveillance en fonction d'au moins l'une parmi la température ambiante et l'humidité relative afin de générer les données de compte-rendu, et amener le moyen de compte-rendu (430) à présenter les données de compte-rendu sous forme de tableau.

**13.** Système de surveillance pour surveiller une condition d'un coupe-circuit de surtension, comprenant :

un dispositif de surveillance selon l'une quelconque des revendications 1 à 10 ; et
un organe de commande d'accès programmable (14) pour gérer les communications parmi le dispositif de surveillance et un récepteur.

**14.** Procédé pour surveiller une condition d'un coupe-circuit de surtension (2), **caractérisé en ce qu'**il comprend l'étape consistant à acquérir des données de surveillance d'un recouvrement de courant de fuite du coupe-circuit de surtension (2) sur une période de surveillance de recouvrement.

**15.** Procédé selon la revendication 14, comprenant en outre les étapes consistant à :

générer des données de compte-rendu indicatives de la condition du coupe-circuit de surtension (2) en fonction des données de surveillance ; et
faire le compte-rendu des données de compte-rendu ;
dans lequel lesdites données de surveillance comprennent des valeurs de mesure du courant de fuite et des temps de mesure respectifs.

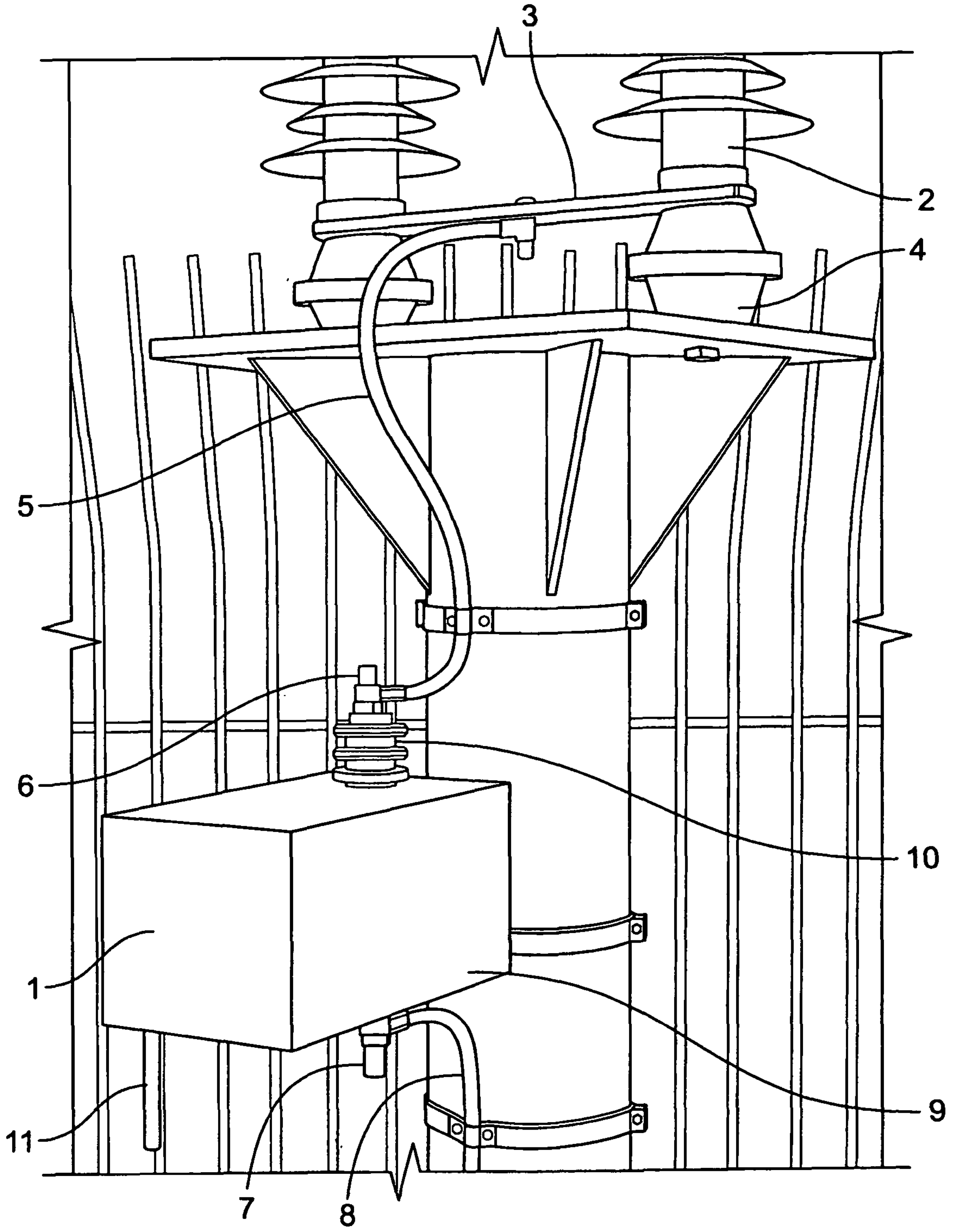


**Fig. 1**

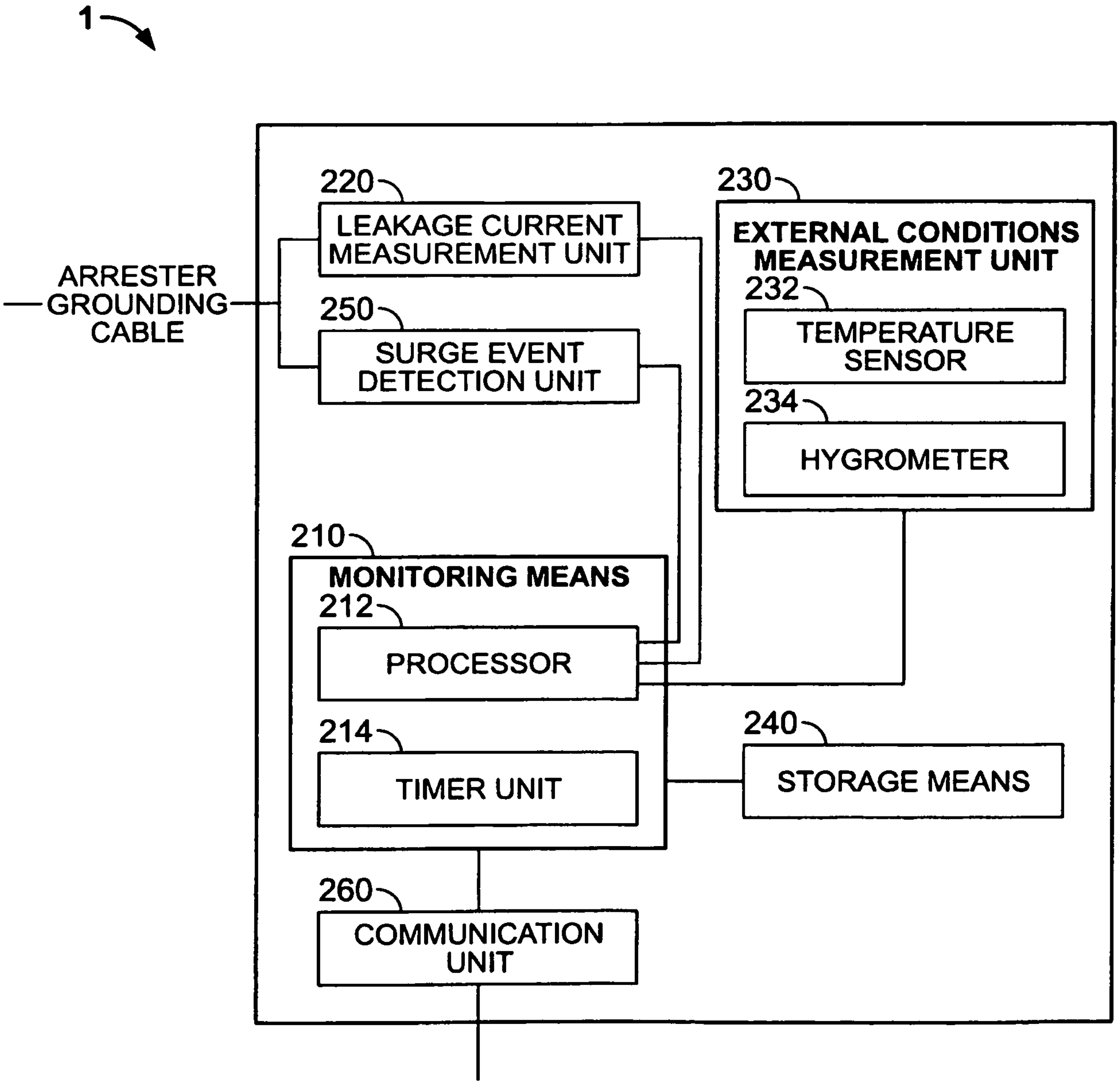
1
ARRESTER GROUNDING CABLE
220
LEAKAGE CURRENT MEASUREMENT UNIT
250
SURGE EVENT DETECTION UNIT
230
EXTERNAL CONDITIONS MEASUREMENT UNIT
232
TEMPERATURE SENSOR
234
HYGROMETER
210
MONITORING MEANS
212
PROCESSOR
214
TIMER UNIT
240
STORAGE MEANS
260
COMMUNICATION UNIT

Fig. 2

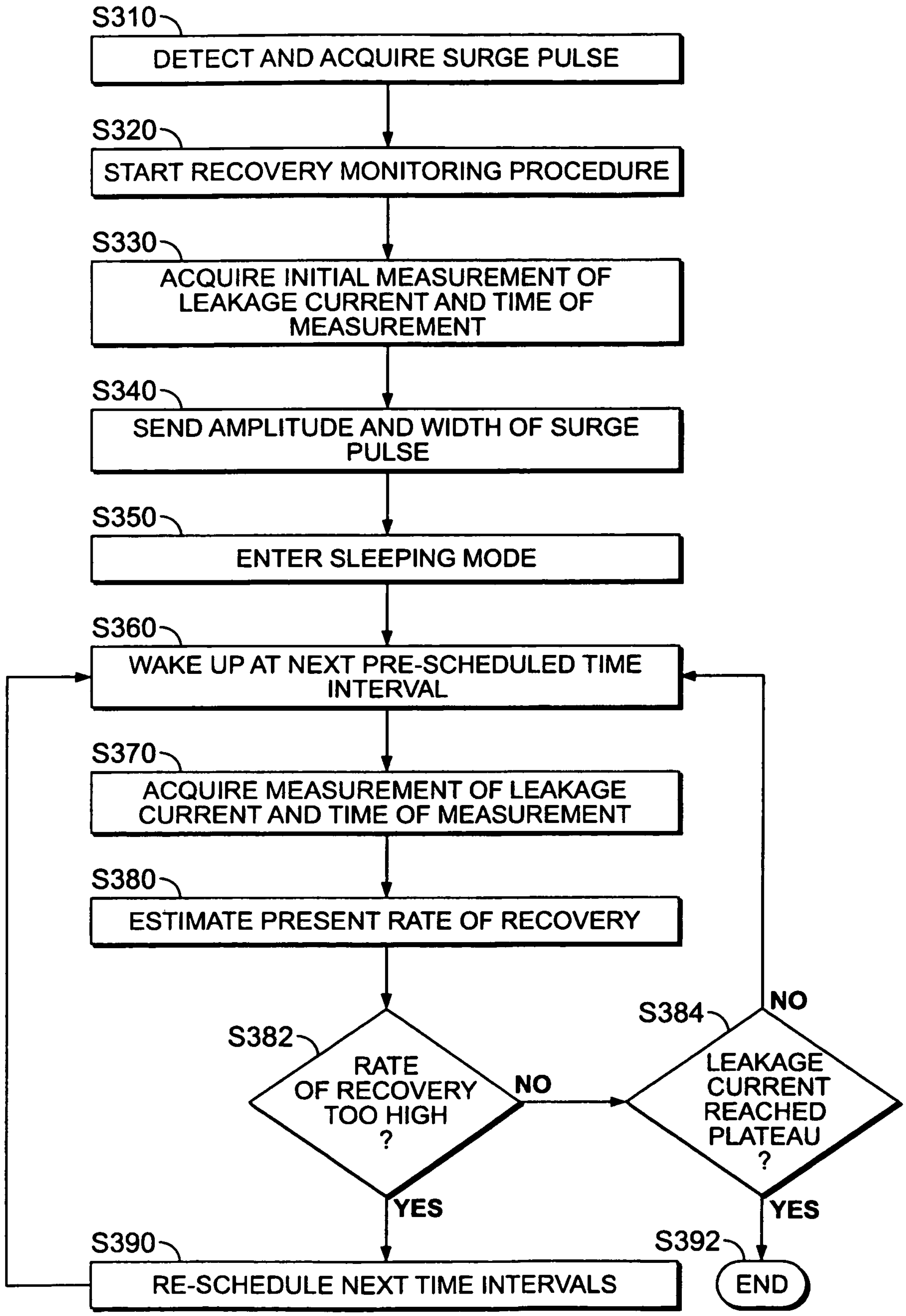
S310
DETECT AND ACQUIRE SURGE PULSE
S320
START RECOVERY MONITORING PROCEDURE
S330
ACQUIRE INITIAL MEASUREMENT OF LEAKAGE CURRENT AND TIME OF MEASUREMENT
S340
SEND AMPLITUDE AND WIDTH OF SURGE PULSE
S350
ENTER SLEEPING MODE
S360
WAKE UP AT NEXT PRE-SCHEDULED TIME INTERVAL
S370
ACQUIRE MEASUREMENT OF LEAKAGE CURRENT AND TIME OF MEASUREMENT
S380
ESTIMATE PRESENT RATE OF RECOVERY
S382
RATE OF RECOVERY TOO HIGH ?
NO
YES
S384
LEAKAGE CURRENT REACHED PLATEAU ?
NO
YES
S390
RE-SCHEDULE NEXT TIME INTERVALS
S392
END

Fig. 3

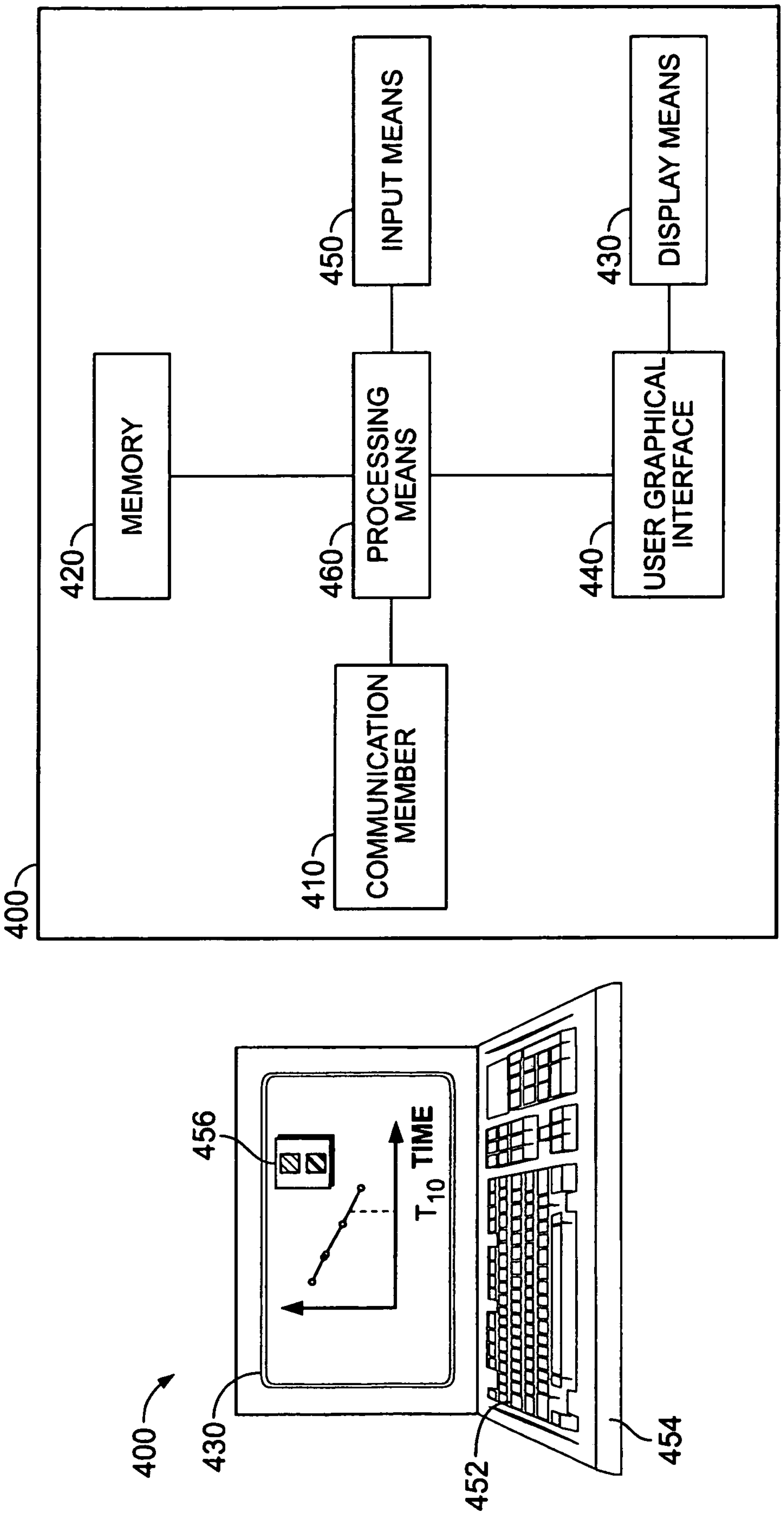
400
410
COMMUNICATION MEMBER
420
MEMORY
460
PROCESSING MEANS
450
INPUT MEANS
440
USER GRAPHICAL INTERFACE
430
DISPLAY MEANS
400
430
456
T10 TIME
452
454

Fig. 4

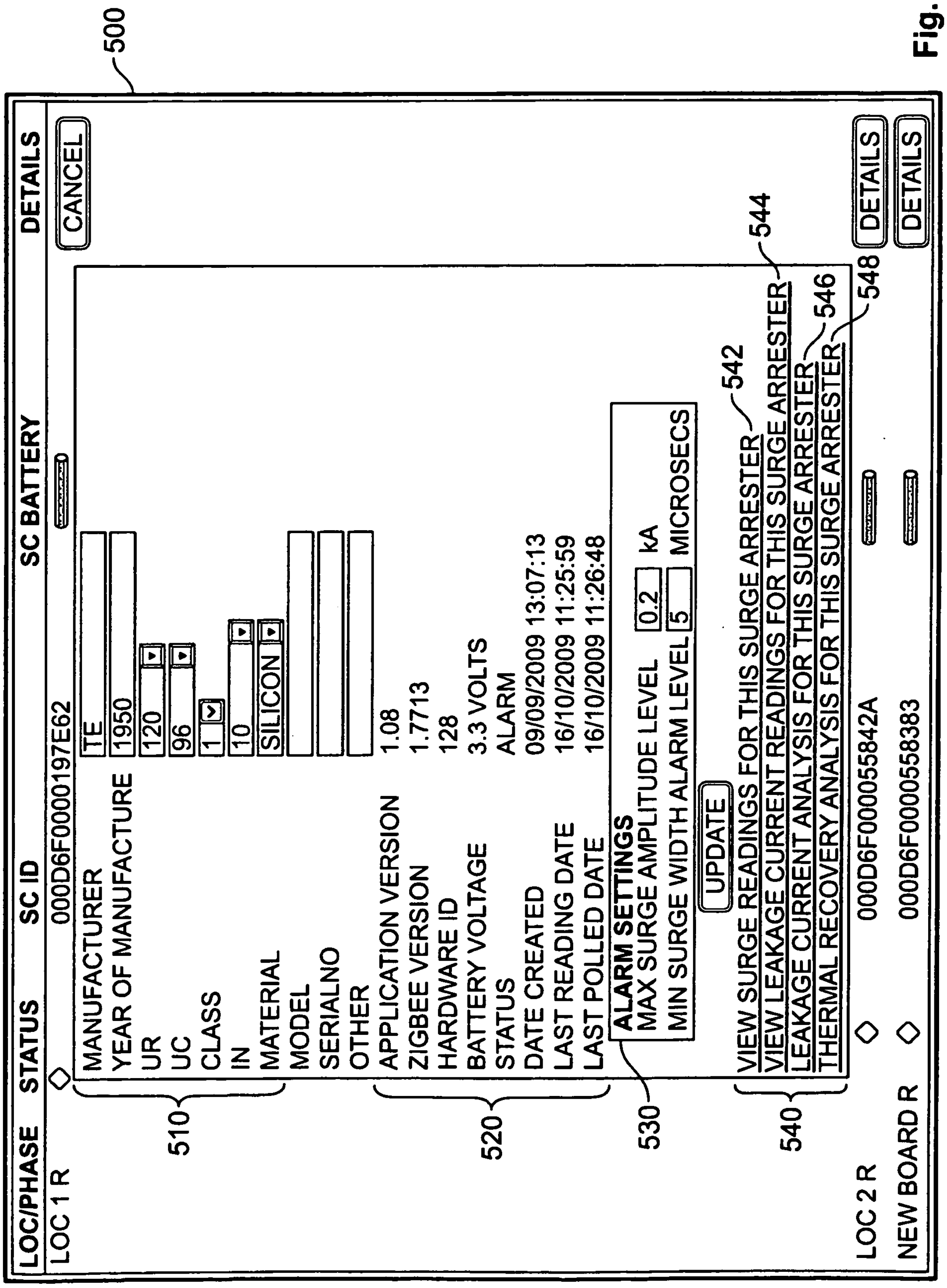
500
LOC/PHASE
STATUS
SC ID
SC BATTERY
DETAILS
LOC 1 R
000D6F0000197E62
CANCEL
510
MANUFACTURER
TE
YEAR OF MANUFACTURE
1950
UR
120
UC
96
CLASS
1
IN
10
MATERIAL
SILICON
MODEL
SERIALNO
OTHER
520
APPLICATION VERSION
1.08
ZIGBEE VERSION
1.7713
HARDWARE ID
128
BATTERY VOLTAGE
3.3 VOLTS
STATUS
ALARM
DATE CREATED
09/09/2009 13:07:13
LAST READING DATE
16/10/2009 11:25:59
LAST POLLED DATE
16/10/2009 11:26:48
530
ALARM SETTINGS
MAX SURGE AMPLITUDE LEVEL
0.2
kA
MIN SURGE WIDTH ALARM LEVEL
5
MICROSECS
UPDATE
540
VIEW SURGE READINGS FOR THIS SURGE ARRESTER
542
VIEW LEAKAGE CURRENT READINGS FOR THIS SURGE ARRESTER
544
LEAKAGE CURRENT ANALYSIS FOR THIS SURGE ARRESTER
546
THERMAL RECOVERY ANALYSIS FOR THIS SURGE ARRESTER
548
LOC 2 R
000D6F000055842A
DETAILS
NEW BOARD R
000D6F0000558383
DETAILS

Fig. 5

SURGE ARRESTER: LOC 1

BACK TO PREVIOUS PAGE 610

606 PAGE 1 OF 3 612 608 602 604 600

| READING DATE | READING TIME | SURGE WIDTH (MICROSECONDS) | SURGE AMPLITUDE (kA) | ALARM FLAGGED | LEAKAGE CURRENT |
|---|---|---|---|---|---|
| 16/10/2009 | 11:25:59:000 | 986.7 | 0.002 | TRUE | VIEW 620 |
| 16/10/2009 | 11:25:37:000 | 986.7 | 0.002 | TRUE | VIEW |
| 16/10/2009 | 11:25:17:000 | 887.1 | 0.003 | TRUE | VIEW |
| 16/10/2009 | 11:22:38:000 | 979 | 0.002 | TRUE | VIEW |
| 16/10/2009 | 11:21:32:000 | 975.2 | 0.002 | TRUE | VIEW |
| 02/10/2009 | 11:44:42:040 | 956 | 0.003 | TRUE | VIEW |
| 02/10/2009 | 11:44:42:020 | 4838 | 0.033 | TRUE | VIEW |
| 02/10/2009 | 11:44:42:000 | 501.2 | 0.006 | TRUE | VIEW |
| 02/10/2009 | 11:44:39:000 | 753.1 | 0.004 | TRUE | VIEW |
| 02/10/2009 | 11:42:54:000 | 770.2 | 0.003 | TRUE | VIEW |
| 02/10/2009 | 11:42:51:000 | 952.2 | 0.003 | TRUE | VIEW |
| 02/10/2009 | 11:41:45:000 | 921.5 | 0.003 | TRUE | VIEW |
| 02/10/2009 | 11:41:33:000 | 954.2 | 0.002 | TRUE | VIEW |
| 02/10/2009 | 11:40:15:000 | 982.8 | 0.002 | TRUE | VIEW |
| 02/10/2009 | 10:32:46:000 | 697.4 | 0.004 | TRUE | VIEW |
| 02/10/2009 | 10:32:43:000 | 749.3 | 0.004 | TRUE | VIEW |
| 02/10/2009 | 10:31:17:020 | 5163.1 | 0.004 | TRUE | VIEW |
| 02/10/2009 | 10:31:17:000 | 290.5 | 0.007 | TRUE | VIEW |
| 02/10/2009 | 10:31:12:000 | 887.1 | 0.003 | TRUE | VIEW |
| 29/09/2009 | 09:23:53:000 | 1034.6 | 0.002 | TRUE | VIEW |

Fig. 6

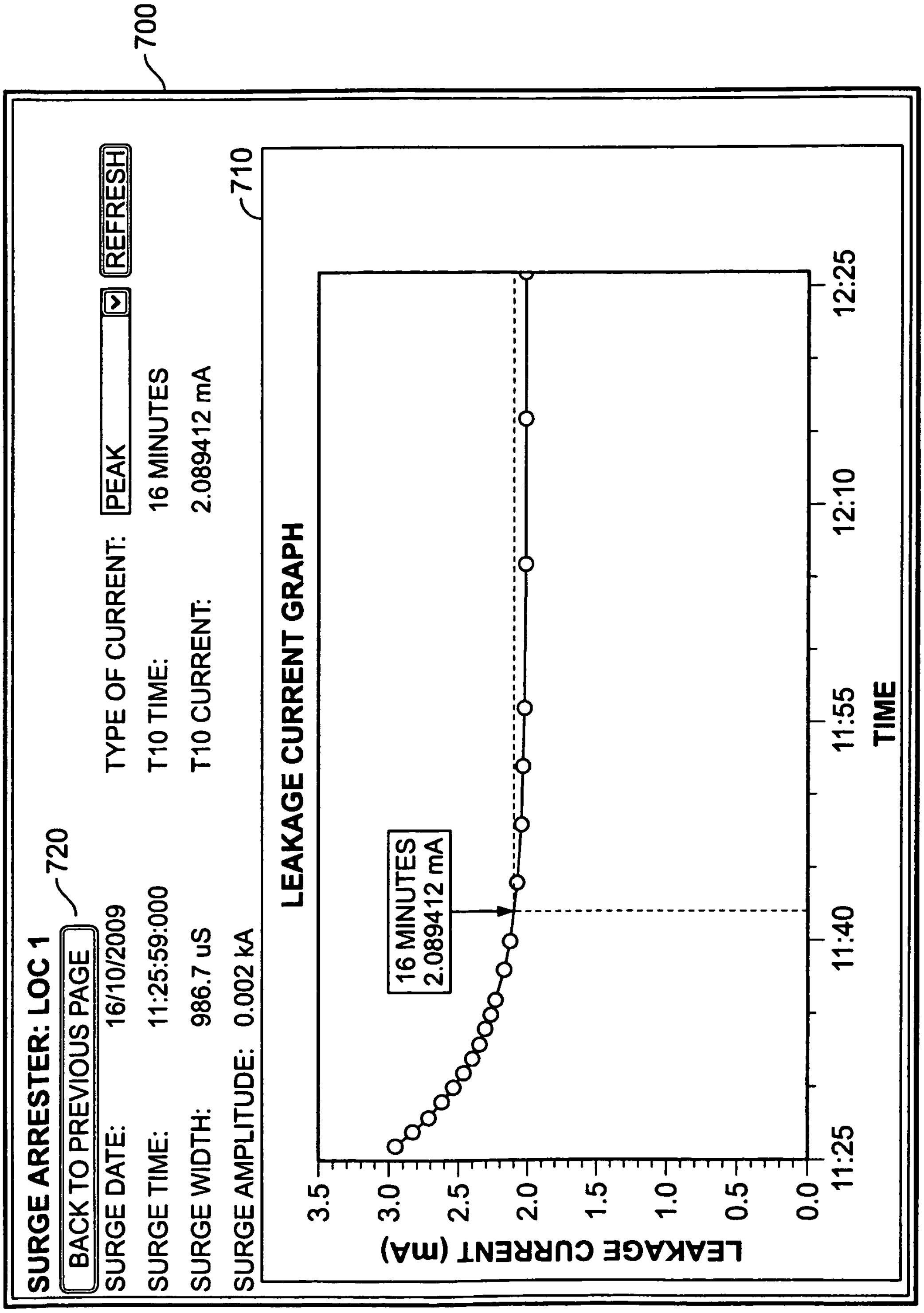
700
SURGE ARRESTER: LOC 1
BACK TO PREVIOUS PAGE
720
SURGE DATE: 16/10/2009
SURGE TIME: 11:25:59:000
SURGE WIDTH: 986.7 uS
SURGE AMPLITUDE: 0.002 kA
TYPE OF CURRENT: PEAK
REFRESH
T10 TIME: 16 MINUTES
T10 CURRENT: 2.089412 mA
710
LEAKAGE CURRENT GRAPH
16 MINUTES
2.089412 mA
LEAKAGE CURRENT (mA)
3.5
3.0
2.5
2.0
1.5
1.0
0.5
0.0
11:25
11:40
11:55
12:10
12:25
TIME

Fig. 7

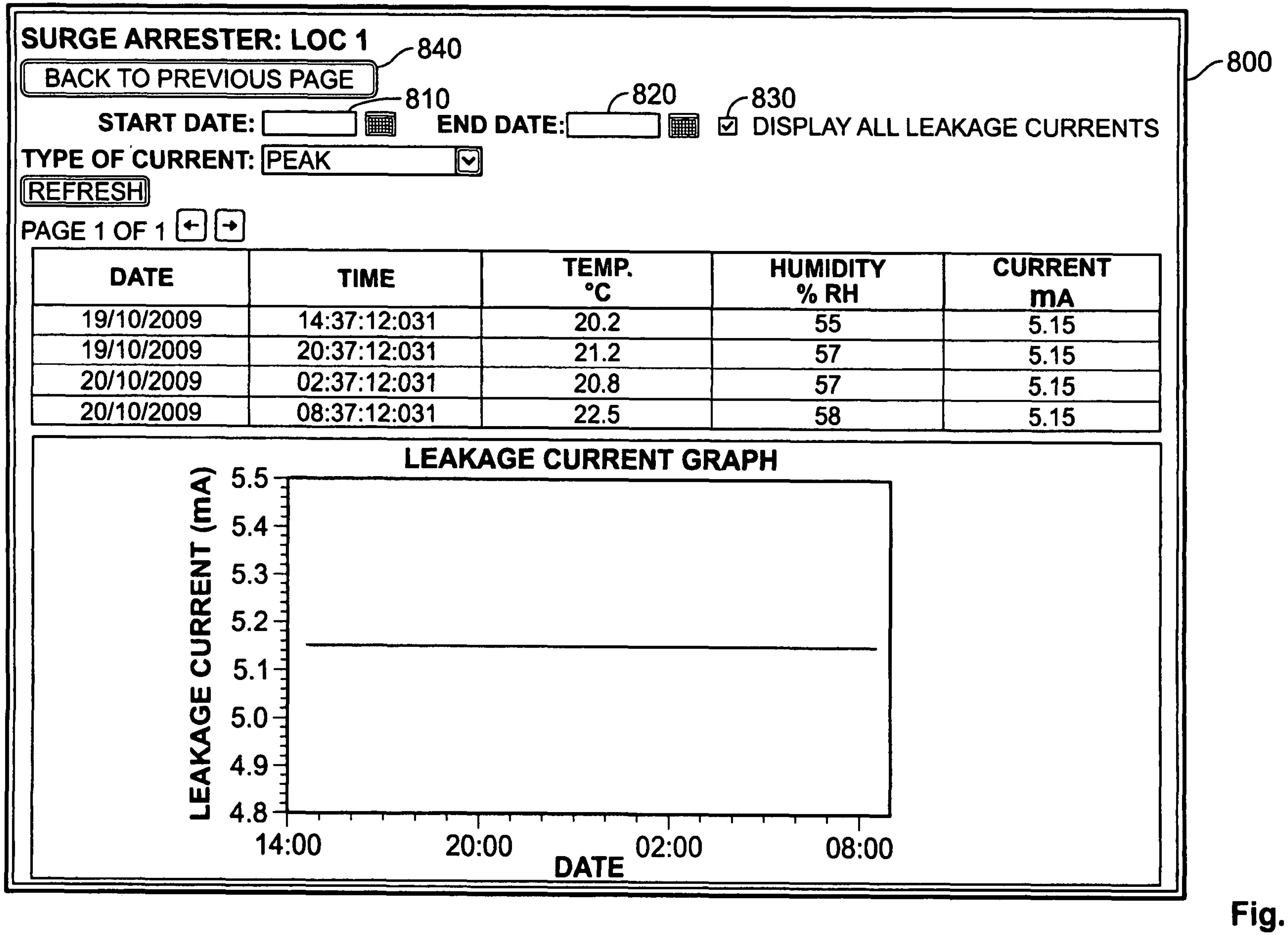
800
SURGE ARRESTER: LOC 1
840
BACK TO PREVIOUS PAGE
810
START DATE:
820
END DATE:
830
DISPLAY ALL LEAKAGE CURRENTS
TYPE OF CURRENT: PEAK
REFRESH
PAGE 1 OF 1
DATE | TIME | TEMP. °C | HUMIDITY % RH | CURRENT mA
19/10/2009 | 14:37:12:031 | 20.2 | 55 | 5.15
19/10/2009 | 20:37:12:031 | 21.2 | 57 | 5.15
20/10/2009 | 02:37:12:031 | 20.8 | 57 | 5.15
20/10/2009 | 08:37:12:031 | 22.5 | 58 | 5.15
LEAKAGE CURRENT GRAPH
LEAKAGE CURRENT (mA)
5.5
5.4
5.3
5.2
5.1
5.0
4.9
4.8
14:00
20:00
02:00
08:00
DATE

Fig. 8

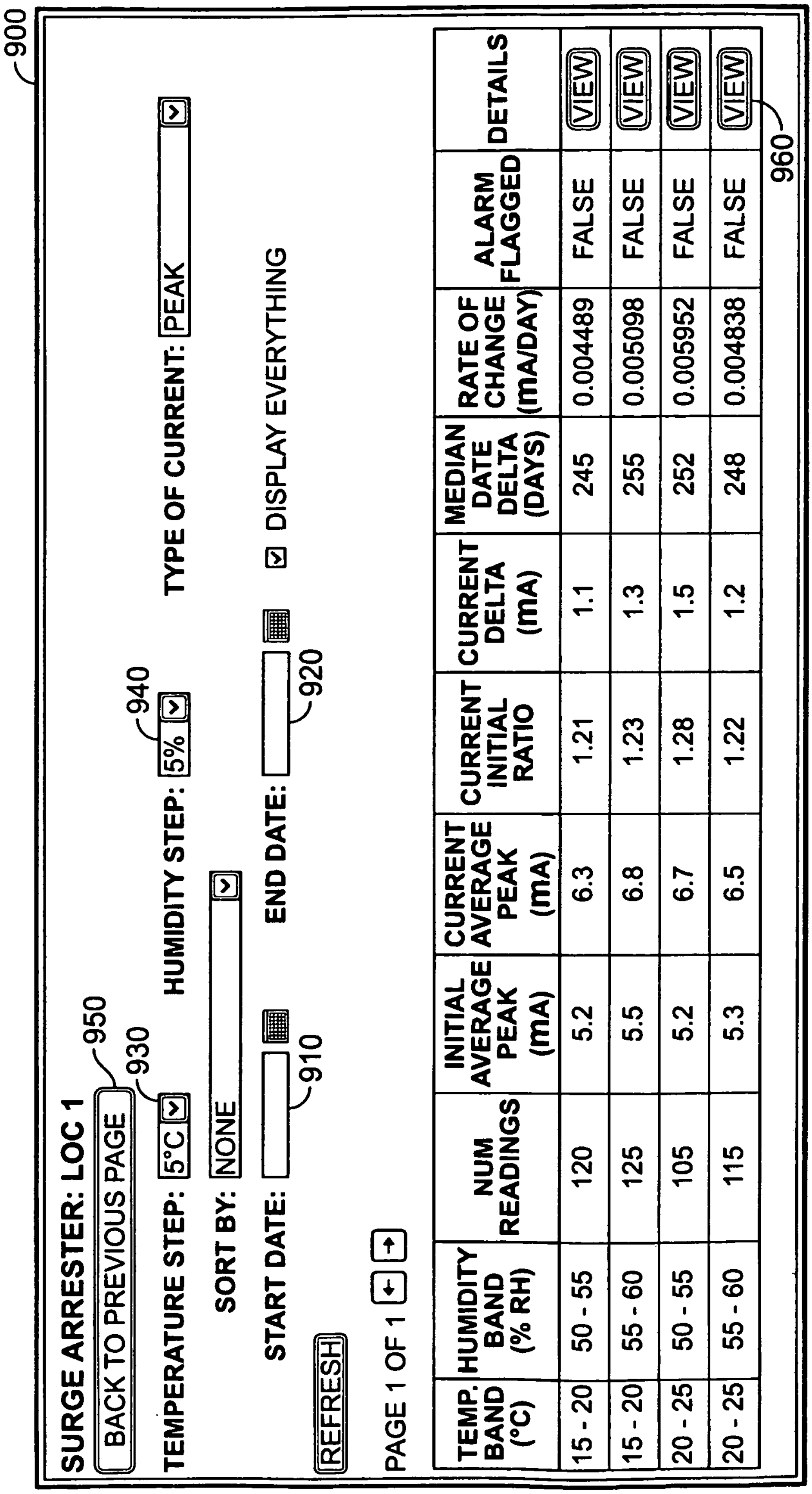
900
SURGE ARRESTER: LOC 1
BACK TO PREVIOUS PAGE
950
TEMPERATURE STEP: 5°C
930
HUMIDITY STEP: 5%
940
TYPE OF CURRENT: PEAK
SORT BY: NONE
START DATE:
910
END DATE:
920
DISPLAY EVERYTHING
REFRESH
PAGE 1 OF 1
TEMP. BAND (°C) | HUMIDITY BAND (% RH) | NUM READINGS | INITIAL AVERAGE PEAK (mA) | CURRENT AVERAGE PEAK (mA) | CURRENT INITIAL RATIO | CURRENT DELTA (mA) | MEDIAN DATE DELTA (DAYS) | RATE OF CHANGE (mA/DAY) | ALARM FLAGGED | DETAILS
15 - 20 | 50 - 55 | 120 | 5.2 | 6.3 | 1.21 | 1.1 | 245 | 0.004489 | FALSE | VIEW
15 - 20 | 55 - 60 | 125 | 5.5 | 6.8 | 1.23 | 1.3 | 255 | 0.005098 | FALSE | VIEW
20 - 25 | 50 - 55 | 105 | 5.2 | 6.7 | 1.28 | 1.5 | 252 | 0.005952 | FALSE | VIEW
20 - 25 | 55 - 60 | 115 | 5.3 | 6.5 | 1.22 | 1.2 | 248 | 0.004838 | FALSE | VIEW
960

Fig. 9

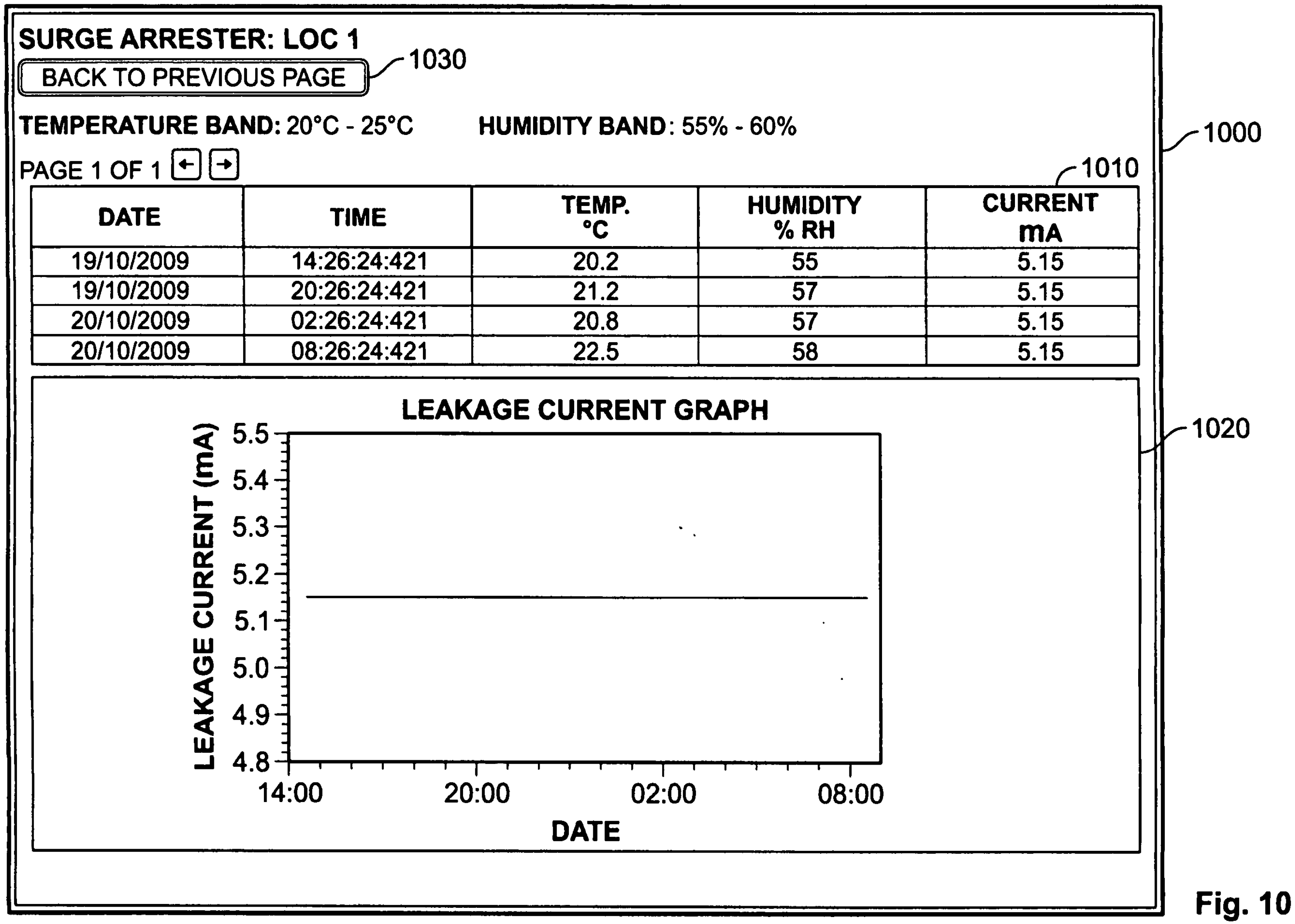


| DATE | TIME | TEMP. °C | HUMIDITY % RH | CURRENT mA |
|---|---|---|---|---|
| 19/10/2009 | 14:26:24:421 | 20.2 | 55 | 5.15 |
| 19/10/2009 | 20:26:24:421 | 21.2 | 57 | 5.15 |
| 20/10/2009 | 02:26:24:421 | 20.8 | 57 | 5.15 |
| 20/10/2009 | 08:26:24:421 | 22.5 | 58 | 5.15 |

Fig. 10

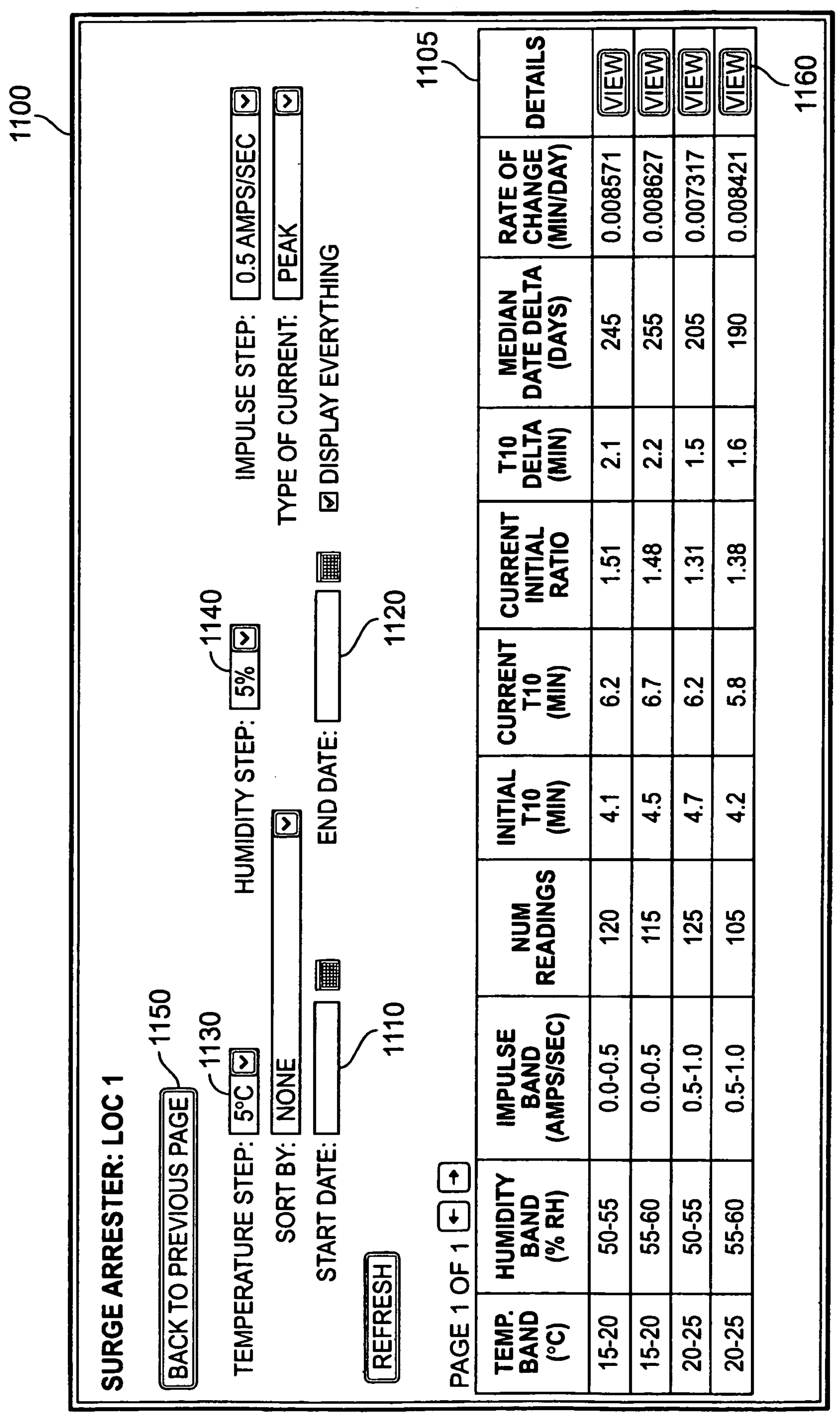
1100
SURGE ARRESTER: LOC 1
BACK TO PREVIOUS PAGE
1150
TEMPERATURE STEP: 5°C
1130
HUMIDITY STEP: 5%
1140
IMPULSE STEP: 0.5 AMPS/SEC
SORT BY: NONE
TYPE OF CURRENT: PEAK
START DATE:
1110
END DATE:
1120
DISPLAY EVERYTHING
REFRESH
PAGE 1 OF 1
1105
TEMP. BAND (°C) | HUMIDITY BAND (% RH) | IMPULSE BAND (AMPS/SEC) | NUM READINGS | INITIAL T10 (MIN) | CURRENT T10 (MIN) | CURRENT INITIAL RATIO | T10 DELTA (MIN) | MEDIAN DATE DELTA (DAYS) | RATE OF CHANGE (MIN/DAY) | DETAILS
15-20 | 50-55 | 0.0-0.5 | 120 | 4.1 | 6.2 | 1.51 | 2.1 | 245 | 0.008571 | VIEW
15-20 | 55-60 | 0.0-0.5 | 115 | 4.5 | 6.7 | 1.48 | 2.2 | 255 | 0.008627 | VIEW
20-25 | 50-55 | 0.5-1.0 | 125 | 4.7 | 6.2 | 1.31 | 1.5 | 205 | 0.007317 | VIEW
20-25 | 55-60 | 0.5-1.0 | 105 | 4.2 | 5.8 | 1.38 | 1.6 | 190 | 0.008421 | VIEW
1160

Fig. 11

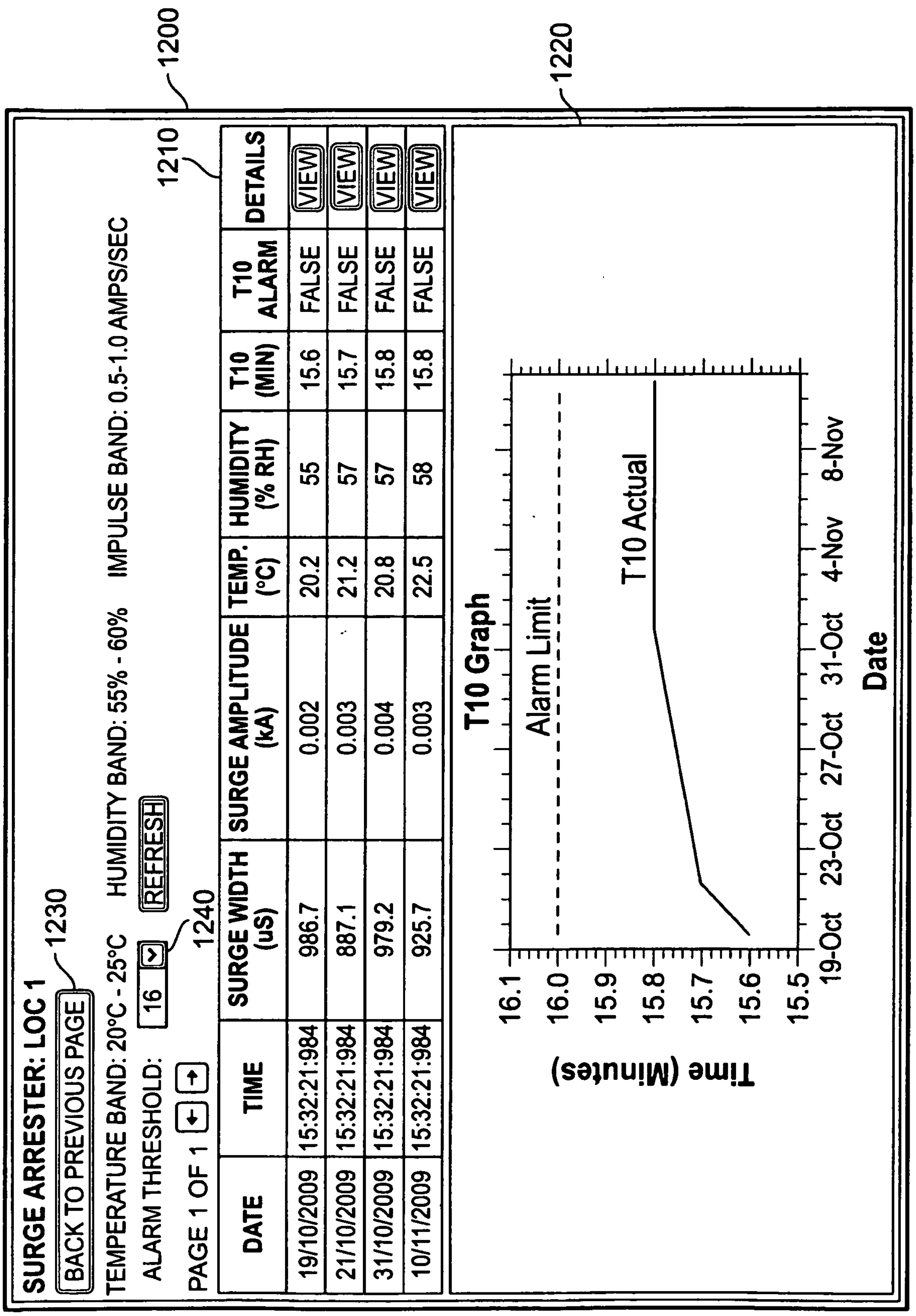
1200
1210
1220
1230
1240
SURGE ARRESTER: LOC 1
BACK TO PREVIOUS PAGE
TEMPERATURE BAND: 20°C - 25°C HUMIDITY BAND: 55% - 60% IMPULSE BAND: 0.5-1.0 AMPS/SEC
ALARM THRESHOLD: 16
REFRESH
PAGE 1 OF 1
DATE | TIME | SURGE WIDTH (uS) | SURGE AMPLITUDE (kA) | TEMP. (°C) | HUMIDITY (% RH) | T10 (MIN) | T10 ALARM | DETAILS
19/10/2009 | 15:32:21:984 | 986.7 | 0.002 | 20.2 | 55 | 15.6 | FALSE | VIEW
21/10/2009 | 15:32:21:984 | 887.1 | 0.003 | 21.2 | 57 | 15.7 | FALSE | VIEW
31/10/2009 | 15:32:21:984 | 979.2 | 0.004 | 20.8 | 57 | 15.8 | FALSE | VIEW
10/11/2009 | 15:32:21:984 | 925.7 | 0.003 | 22.5 | 58 | 15.8 | FALSE | VIEW
T10 Graph
Alarm Limit
T10 Actual
Time (Minutes)
16.1
16.0
15.9
15.8
15.7
15.6
15.5
19-Oct
23-Oct
27-Oct
31-Oct
4-Nov
8-Nov
Date

Fig. 12

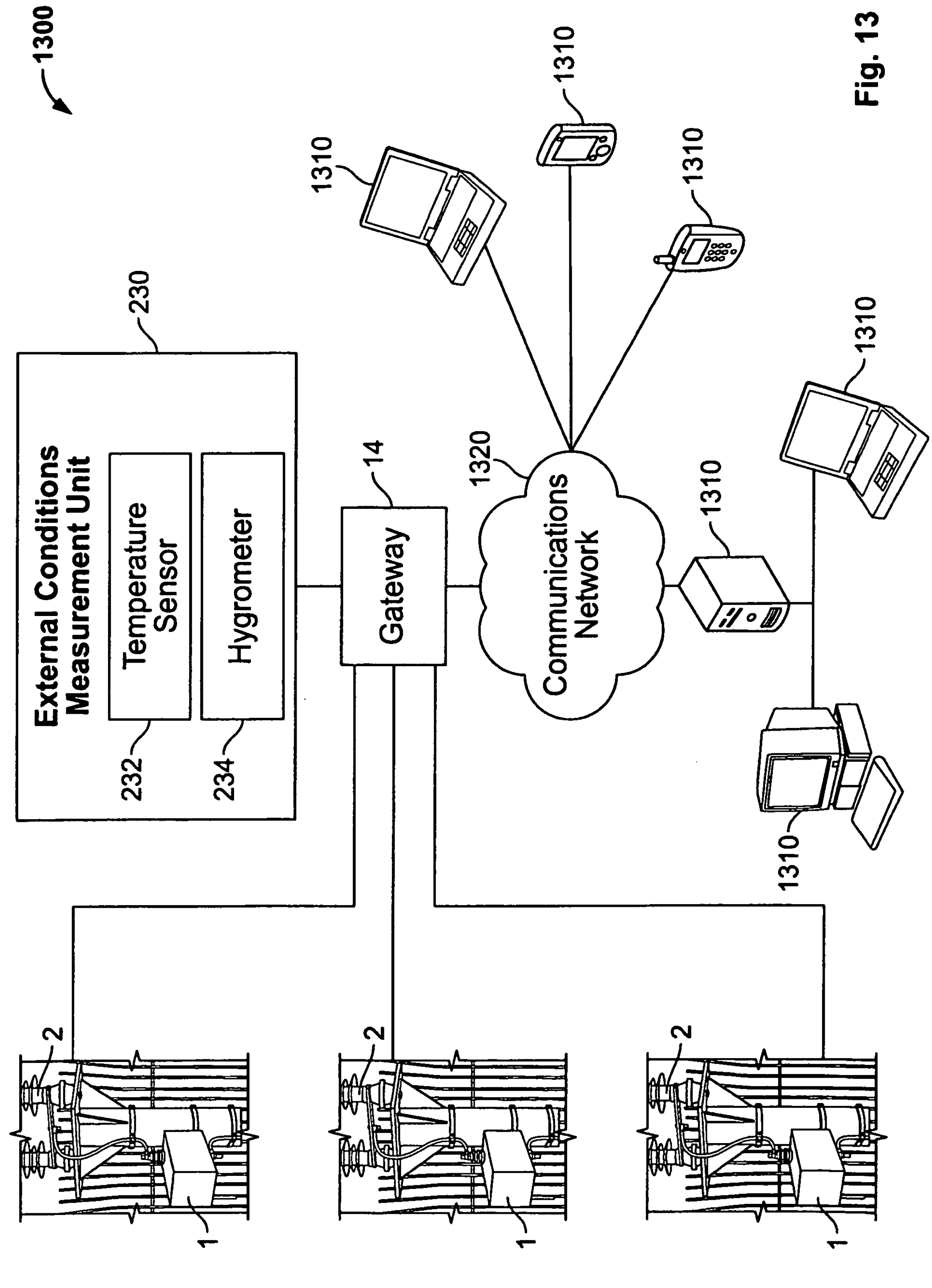
1300
External Conditions Measurement Unit
Temperature Sensor
Hygrometer
230
232
234
Gateway
14
Communications Network
1320
1310
2
1

Fig. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 02061904 A1
- US 4507701 A
- US 7336193 B
- JP 2003037932 B
- EP 0343658 B1